(19) Europäisches Patentamt
European Patent Office
Office européen des brevets

(11) Veröffentlichungsnummer: **0 066 714**
**A2**

# (12) EUROPÄISCHE PATENTANMELDUNG

(21) Anmeldenummer: **82103835.3**

(22) Anmeldetag: **05.05.82**

(51) Int. Cl.³: **C 09 B 62/008,** D 06 P 3/66

(30) Priorität: **15.05.81 DE 3119349**

(43) Veröffentlichungstag der Anmeldung: **15.12.82**
**Patentblatt 82/50**

(84) Benannte Vertragsstaaten: **CH DE FR GB IT LI**

(71) Anmelder: **BASF Aktiengesellschaft,**
**Carl-Bosch-Strasse 38, D-6700 Ludwigshafen (DE)**

(72) Erfinder: **Augart, Dietmar, Dr.,**
**Gerhart-Hauptmann-Strasse 20, D-6711 Hessheim (DE)**
Erfinder: **Krueger, Heinz, Dr., Londoner Ring 4,**
**D-6700 Ludwigshafen (DE)**

## (54) Reaktivfarbstoffe.

(57) Die Erfindung betrifft sulfonsäuregruppenhaltige Verbindungen der allgemeinen Formel I

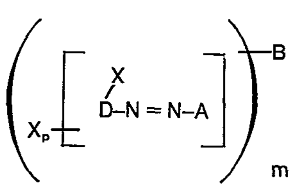

I,

in der

D den Rest einer Diazokomponente,

X einen faserreaktiven Rest,

m die Zahlen 1 oder 2, für m = 1 X–B = X und für m = 2 B ein Brückenglied,

p die Zahlen 0 oder 1 und

A einen Rest der Formeln

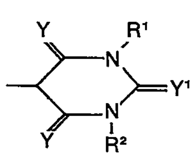

oder

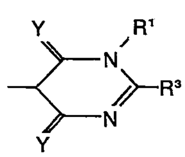

bedeuten, wobei

$R^1$ Wasserstoff, gegebenenfalls substituiertes Alkyl oder Phenyl,

$R^2$ Wasserstoff, gegebenenfalls substituiertes Alkyl oder Phenyl,

$R^3$ gegebenenfalls substituiertes Amino oder Hydroxy,

Y Sauerstoff oder gegebenenfalls substituiertes Imino und

$Y^1$ Sauerstoff oder gegebenenfalls substituiertes Imino sind und wobei

$R^1$ und $Y^1$ oder $R^1$ und $R^3$ zu einem Ring verknüpft sein können und

A weder der Barbitursäurerest noch ein Triaminopyrimidinrest ist.

Die erfindungsgemäßen Verbindungen eignen sich vorzüglich zum Färben hydroxylgruppenhaltiger Fasern.

EP 0 066 714 A2

## Reaktivfarbstoffe

Die Erfindung betrifft sulfonsäuregruppenhaltige Verbindungen der allgemeinen Formel I

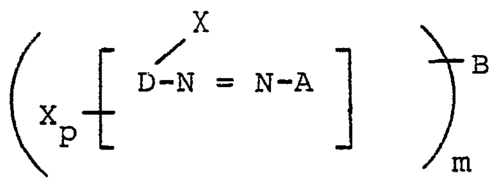

I,

in der

D den Rest einer Diazokomponente,

X einen faserreaktiven Rest,

m die Zahlen 1 oder 2,
für m = 1 X-B = X und
für m = 2 B ein Brückenglied,

p die Zahlen 0 oder 1 und

A einen Rest der Formeln

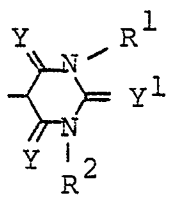

oder

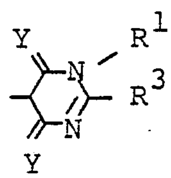

bedeuten, wobei

$R^1$ Wasserstoff, gegebenenfalls substituiertes Alkyl oder Phenyl,

$R^2$ Wasserstoff, gegebenenfalls substituiertes Alkyl oder Phenyl,

$R^3$ gegebenenfalls substituiertes Amino oder Hydroxy,

Bg/P

Y Sauerstoff oder gegebenenfalls substituiertes Imino und
$Y^1$ Sauerstoff oder gegebenenfalls substituiertes Imino sind und wobei
$R^1$ und $Y^1$ oder $R^1$ und $R^3$ zu einem Ring verknüpft sein können und
A weder der Barbitursäurerest noch ein Triaminopyrimidinrest ist.

Die Reste D der Diazokomponenten stammen insbesondere aus der Anilin- oder Aminonaphthalinreihe und können Substituenten wie Chlor, Brom, $C_1$- bis $C_4$-Alkyl oder -Alkoxy, Acetylamino, Propionylamino, Trifluormethyl und insbesondere Hydroxysulfonyl tragen. Außerdem haben sie vorzugsweise eine Aminogruppe zur Anknüpfung des faserreaktiven Restes.

Einzelne Diazokomponenten sind beispielsweise:
Anilin, o-, m-, p-Toluidin, o-, m-, p-Chloranilin, o-, m-, p-Anisidin, o-, m-, p-Nitroanilin, 2-Nitro-4-methylanilin, 3-Nitro-4-methylanilin, 2-Nitro-4-chloranilin, 2-Methyl-5-nitroanilin, 2-Methyl-4-nitroanilin, 2-Chlor-4-nitroanilin, 4-Nitroanilin-2-methylsulfon, Anilin-o-, -m-, -p-sulfonsäure, 2-Amino-3-chlorbenzolsulfonsäure, 2-Amino-4-chlorbenzolsulfonsäure, 2-Amino-5-chlorbenzolsulfonsäure, 3-Amino-4-chlorbenzolsulfonsäure, 2-Chlor-5-aminobenzolsulfonsäure, 2-Amino-5-methylbenzolsulfonsäure, 2-Methyl-5-aminobenzolsulfonsäure, 2-Methyl-4-aminobenzolsulfonsäure, 2-Amino-5-methoxybenzolsulfonsäure, 2-Methoxy-5-aminobenzolsulfonsäure, 2-Amino-4-chlor-5-methylbenzolsulfonsäure, 2-Amino-4-methyl-5-chlorbenzolsulfonsäure, 2-Amino-5-nitrobenzolsulfonsäure, 3-Nitro-4-aminobenzolsulfonsäure, Anilin-2,4-, -3,5- und

-2,5-disulfonsäure, 2-Amino-4,5-disulfotoluol, 2-Amino-3,5-disulfochlorbenzol, 2-Amino-3,5-disulfotoluol, 2-Amino-3,5-dimethylbenzolsulfonsäure, 4-Amino-2,5-disulfoanisol, 2-Methoxy-3-amino-5-methylbenzolsulfonsäure, 2-Amino-4-(methylamino)methylbenzolsulfonsäure, N,N-4-Aminobenzylmethylamin, 4-Nitro-4'-aminostilben-2,2'-disulfosäure, 2-Amino-4-acetaminobenzolsulfonsäure, 2-Amino-5-acetaminobenzolsulfonsäure, o-, m-, p-Aminobenzoesäure sowie deren $C_1$- bis $C_4$-Alkylester, Anilin-3- und -4-sulfonamid, o- und p-Aminobenzonitril, Gelb- und Digelbsäure, 2-(3'-Phenyl-1',2',4'-oxdiazolyl-5')-anilin-4-sulfonsäure, 2'-(3'-Methyl-1',2',4'-oxdiazolyl-5')-anilin-4-sulfonsäure, 2-[3'-(2"-Sulfophenyl)-1',2',4'-oxdiazolyl-5']-4-nitroanilin, 2-[3'-(2"-Hydroxysulfonyläthyl)-1',2',4'-oxdiazolyl-5']-4-nitroanilin, 2-[3'-(ß-Hydroxysulfonyläthyl)-1',2',4'-oxdiazolyl-5']-4-sulfoanilin, 2-(3'-Phenyl-1',2',4'-oxdiazolyl-5')-anilin, 2-(3'-Methyl-1',2',4'-oxdiazolyl-5')-anilin, 4-Allylsulfonylanilin, 3-Allylsulfonylanilin, 2-Allylsulfonylanilin, 4-(Propenyl-1')-sulfonylanilin, 4-Vinylsulfonylanilin, 3-(ß-Sulfatoäthyl)-sulfonylanilin, 4-(ß-Sulfatoäthyl)-sulfonylanilin, 4-(ß-Chloräthyl)-sulfonylanilin, 4-(ß-Hydroxy-γ-chlorpropyl)-sulfonylanilin, 4-(3'-Hydroxypropenyl-1')-sulfonylanilin, 4-(ß-Sulfopropyl)-sulfonylanilin, 4-(ß-Sulfo-γ-hydroxypropyl)-sulfonylanilin, 2-Amino-5-sulfobenzoesäure, 3-Amino-6-nitrobenzoesäure, 3-Nitro-4-aminobenzoesäure, 2-[(3'-Amino-4'-sulfo)-phenyl-1']-4,6-dichlortriazin, 2-[(4'-Amino-3'-sulfo)-phenyl-1']-4,6-dichlortriazin, 2-[(3'-Amino-4',6'-disulfo)-phenyl-1']-4,6-dichlortriazin, 2-[(4'-Amino-2',5'-disulfo)-phenyl-1']-4,6-dichlortriazin, [(3'-Amino-4',5'-disulfo)-phenyl-1']-4,6-dichlortriazin, 2-Naphthylamin-1-, -5-, -6-, -7- und -8-sulfonsäure,

2-Naphthylamin-1,5-, -3,6-, -4,8-, -5,7- und -6,8-disulfonsäure, 2-Naphthylamin-4,6,8-trisulfosäure, 2-Naphthylamin-3,6,8-trisulfosäure, 1-Naphthylamin-2-, -3-, -4-, -5-, -6- und -7-sulfosäure, 1-Naphthylamin-3,6-, -3,7- und -4,7-disulfosäure, 2-Amino-6-nitronaphthalin-4,8-disulfosäure, 1,6-Diamino- und 2,6-Diaminonaphthalin-4,8-disulfosäure, 1-Naphthylamin-3,6,8-trisulfosäure oder 1-Naphthylamin-4,6,8-trisulfosäure, 2-Naphthylamin-1,5,7-trisulfosäure, 1-Amino-2-methoxy- und 1-Amino-2-äthoxynaphthalinsulfonsäure-6, 2-Amino-5-aminomethylnaphthalinsulfonsäure-1, 1-Amino-4-nitronaphthalinsulfonsäure-6 und 1,4-Diaminonaphthalinsulfonsäure-6.

Brückenglieder B für m = 2 sind beispielsweise:
heterocyclische Diamine, z. B. Piperazin, ß-Aminoäthylpiperazin,
aliphatische Diamine, z. B. Alkylen-, Hydroxyalkylen- oder Sulfatoalkylendiamine, insbesondere solche mit 2 bis 6 Kohlenstoffatomen, z. B. Äthylendiamin, 1,2- und 1,3-Propylendiamin, 1,6-Diaminohexan, ß-Hydroxyäthylaminoäthylamin, 2-Hydroxy-1,3-diaminopropan und 2-Sulfato-1,3-diaminopropan, andere aliphatische $\alpha,\omega$-Diaminoverbindungen, z. B. Triäthylentetramin und Di(ß-aminoäthyl)-äther,
Naphthylendiaminsulfonsäuren, z. B. 2,6-Diaminonaphthalin-1,5- und -4,8-disulfonsäure und 1,5-Diaminonaphthalin-3,7-disulfonsäure,
Diaminderivate von mono- und dicyclischen Verbindungen der Benzolreihe, z. B. Phenylendiamine und deren Mono- und Disulfonsäuren, beispielsweise m- und p-Phenylendiamin, 1,3-Phenylendiamin-5-sulfon- und -4,6-disulfonsäure und 1,4-Phenylendiamin-2-sulfon- und -2,5-disulfonsäure,

Diamine der Formel

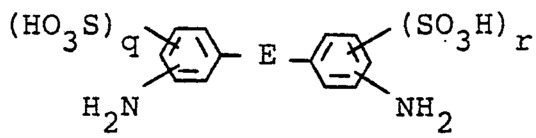

worin q und r jeweils für 0 oder 1 stehen und E für eine direkte Bindung oder eine Gruppe der Formel $SO_2$, $CH_2$, $C_2H_4$, NH oder NHCONH steht, z. B. 4,4'-Diaminostilben-2,2'-disulfonsäure, Benzidin-2-sulfon- und -2,2'-disulfonsäure, 3,3'- und 4,4'-Diaminodiphenylharnstoff, 4,4'-Diaminodiphenylharnstoff-2,2'- und -3,3'-disulfonsäure, 4,4'-Diaminodiphenylamin-2,2'-disulfonsäure, 4,4'-Diaminodiphenylmethan, 4,4'-Diaminodiphenylmethan-2,2'-disulfonsäure und 4,4'-Diaminodiphenylsulfon, und die N-Niederalkyl- und N,N'-Di(niederalkyl)-Derivate der obigen Diamine, z. B. 4-Methylamino- und 4-Äthylaminoanilin-2-sulfonsäure und N,N'-Dimethyl-4,4'-diaminodiphenylamino-2,2'-disulfonsäure.

Wenn das Brückenglied B mit den Resten A verknüpft ist, d.h. anstelle der Substituenten $R^1$, $Y^1$ oder $R^3$ tritt, kann B sich beispielsweise von folgenden Aminen, Diaminen oder Dihydroxyverbindungen ableiten:
Ammoniak, Hydrazin, α,ω-Diaminoäthan, -propan, -butan, -pentan und -hexan, 2,2'-Dimethyl-1,3-propandiamin, 4,7-Dioxadecan-1,10-diamin, 4,9-Dioxadecan-1,12-diamin, Diaminoäthyläther, Diaminopropyläther, 1,3- und 1,4-Diaminocyclohexan, 4,4'-Diaminodicyclohexylmethan, 3,3'-Dimethyl-4,4'-diaminodicyclohexylmethan, (3-Methyl-4-aminocyclohexyl)-(3-methyl-4-aminophenyl)-methan, 4,4'-Diaminodiphenylmethan, Piperazin, 1-(2-Aminoäthyl)-piperazin,

1,4-Bis(3-Aminopropyl)piperazin, 4-Aminobenzylamin, 1,3- oder 1,4-Diaminobenzol, 1,5-Diaminonaphthalin, 4,4'-Diaminodiphenyläther, 1,3- und 1,4-Diaminomethylbenzol, α,ω-Dihydroxyäthan, -propan, -butan, -pentan, -hexan, 3-Oxapentandiol-1,5 und 3,6-Dioxaoctandiol-1,8.

Faserreaktive Reste X stammen im einzelnen beispielsweise von folgenden Verbindungen:

Acryloylchlorid, ß-Chlorpropionylchlorid, ß-Brompropionylchlorid, Chloracetylchlorid, α,ß-Dichlorpropionylchlorid, 2,3-Dichlorchinoxalin-5-carbonylchlorid, 2,3-Dichlorchinoxalin-6-carbonylchlorid, 2,3-Dichlorchinazolin-5- oder -6-sulfonylchlorid, 2,4-Dichlorchinazolin-6- oder -7-sulfonylchlorid, 2,4,6-Trichlorchinazolin-7- oder -8-sulfonylchlorid, 2,4,7- oder 2,4,8-Trichlorchinazolin-6-sulfonylchlorid, 2,4-Dichlorchinazolin-6-carbonylchlorid, 2,4-Dichlorpyrimidin-5-carbonylchlorid, 4-Vinylsulfonylanilin, 4-(ß-Chloräthyl)-sulfonylanilin, 4-(ß-Hydroxyäthyl)-sulfonylanilin, 3- und 4-(ß-Sulfatoäthyl)-sulfonylanilin, 1-Phenyl-(4'-carbonylchlorid)-4,5-dichlor-6-pyridazon, 2,4,6-Trichlorpyrimidin, 2,4,6-Trichlor-5-methylpyrimidin, 2,4,6-Tribrom-5-cyanpyrimidin, 2,4,5,6-Tetrachlorpyrimidin, 2,4,6-Trifluorpyrimidin, 2,4,6-Trifluor-5-chlorpyrimidin,

Insbesondere seien genannt:
Cyanurfluorid, Cyanurchlorid, Cyanurbromid, 2,4-Dichlor-6-methyltriazin, 2,4-Dichlor-6-phenyltriazin sowie die primären Kondensationsprodukte von Cyanurfluorid, -chlorid und -bromid mit Ammoniak, Aminen, organischen Hydroxy- und Mercaptoverbindungen, also z.B.: Methanol,

Äthanol, Isopropanol, Phenol, α-Naphthol, ß-Naphthol, Chlorphenolen, Cresolen, sulfonierten Phenolen, Thiophenol, Thioglykolsäure, Methylmercaptan, Dimethyldithiocarbaminsäure, 2-Mercaptobenzthiazol, Thioacetamid, Methylamin, Äthylamin, n-Propylamin, Dimethylamin und Diäthylamin, ß-Hydroxyäthylamin, Di-(ß-Hydroxyäthyl)-amin, Piperidin, Morpholin, ß-Methoxyäthylamin, γ-Methoxy- und γ-Äthoxypropylamin, ß-Isopropoxyäthylamin, n-Butoxyäthylamin, Glykol-ß-aminoäthylmethyläther, Glykol-ß-aminoäthyl-ß'-hydroxyäthyläther, ß-(4-Sulfophenyl)-äthylamin, Aminoessigsäure, N-Methylaminoessigsäure, Taurin, N-Methyltaurin, Anilin, N-Methylanilin, Toluidin, Anisidin, Anilin-2,5-, -2,4- und -3,5-disulfonsäure, Anilin-o-, -m- und -p-sulfonsäure, N-Methylanilin-o-, -m- und -p-sulfonsäure, o-, m- und p-Aminobenzoesäure, 4- und 5-Sulfo-2-aminobenzoesäure, 2-Aminotoluol-4-sulfonsäure, 5-Amino-2-hydroxybenzoesäure, ß-Aminoäthansulfonsäure, N-Methylaminoäthansulfonsäure, Mono- und Disulfonsäuren von 1-Amino- und 2-Aminonaphthalin, 4-Allylsulfonylanilin, 3-Allylsulfonylanilin, 4-(Propenyl-1')-sulfonylanilin, 4-Vinylsulfonylanilin, 3-(p-Sulfatoäthyl)-sulfonylanilin, 4-(ß-Sulfatoäthyl)-sulfonylanilin, 4-(ß-Chloräthyl)-sulfonylanilin, 4-(ß-Hydroxy-γ-chlorpropyl)-sulfonylanilin, 4-(3'-Hydroxypropenyl-1')-sulfonylanilin, 4-(ß-Sulfopropyl)-sulfonylanilin, 4-(ß-Sulfo-γ-hydroxypropyl)-sulfonylanilin, 4-Vinylsulfonylanilin, 3-(ß-Sulfatoäthyl-sulfonylanilin, 4-(ß-Sulfatoäthyl)-sulfonylanilin oder 4-(ß-Chloräthyl)-sulfonylanilin.

Gegebenenfalls substituierte Alkyl- und Phenylreste $R^1$ und $R^2$ sind z. B.:

$CH_3$, $C_2H_5$, $n-C_3H_7$, $i-C_3H_7$, $n-C_4H_9$, $i-C_4H_9$, $CH_2C_6H_5$, $C_2H_4C_6H_5$, $CH_2C_6H_4-CH_3$, $CH_2C_6H_4Cl$, $CH_2C_6H_4SO_3H$, $CH_2C_6H_4OH$, $C_2H_4OH$, $i-C_3H_6OH$, $n-C_3H_6OH$, $CH_2OCH_3$, $CH_2OC_2H_5$, $CH_2OC_3H_7$, $CH_2O-i-C_4H_9$, $C_2H_4OCH_3$, $C_2H_4OC_2H_5$, $C_2H_4OC_3H_7$, $C_2H_4O-i-C_3H_7$, $C_2H_4OC_4H_9$, $C_3H_6OCH_3$, $C_3H_6OC_2H_5$, $C_3H_6OC_3H_7$, $C_4H_8OCH_3$, $CH(CH_3)OCH_3$, $CH(CH_3)OC_2H_5$, $CH_2OC_2H_4OCH_3$, $CH_2OC_2H_4OC_2H_5$, $CH_2OC_2H_4OC_3H_7$, $C_2H_4OC_2H_4OCH_3$, $C_2H_4OC_2H_4OC_2H_5$, $C_2H_4OC_2H_4OC_3H_7$, $C_3H_6OC_2H_4OCH_3$, $C_4H_8OC_2H_4OCH_3$, $CH_2OC_2H_4OH$, $CH_2OC_3H_6OH$, $CH_2OC_2H_4OC_2H_4OH$, $C_2H_4OC_2H_4OH$, $C_2H_4OC_2H_4OC_2H_4OH$, $CH_2OCH_2C_6H_5$, $CH_2OC_2H_4C_6H_5$, $CH_2OCH_2C_6H_4Cl$, $CH_2OCH_2C_6H_4OH$, $C_2H_4OCH_2C_6H_5$, $C_2H_4OCH_2C_6H_4SO_3H$, $CH_2OC_6H_5$, $CH_2OC_6H_4Cl$, $CH_2OC_6H_4SO_3H$, $CH_2OC_6H_4CH_3$, $C_2H_4OC_6H_5$, $C_2H_4OC_6H_4SO_3H$, $C_2H_4OC_6H_4COOH$, $C_3H_6OC_6H_5$, $CH_2SO_2CH_3$, $C_2H_4SO_2CH_3$, $CH_2SO_2C_6H_5$, $C_2H_4SO_2C_6H_5$, $C_2H_4SO_2C_6H_4CH_3$, $CH_2COOH$, $C_2H_4COOH$, $C_3H_6COOH$, $C_6H_5$, $C_{10}H_7$, o-, m-, $p-C_6H_4NHCOCH_3$, o-, m-, $p-C_6H_4NHCOC_6H_5$, o-, m-, $p-C_6H_4NO_2$, o-, m-, $p-C_6H_4Cl$, o-, m-, $p-C_6H_4Br$, $C_6H_3Cl_2$, $C_6H_2Cl_3$, o-, m-, $p-C_6H_4CH_3$, o-, m-, $p-C_6H_4C_2H_5$, o-, m-, $p-C_6H_4-OCH_3$, o-, m-, $p-C_6H_4OC_2H_5$, o-, m-, $p-C_6H_4OH$, $C_6H_4(CH_3)-NO_2-$, $p-C_6H_4O-C_6H_5$, o-, m- und $p-C_6H_4COOH$.

Gegebenenfalls substituierte Iminoreste $Y^1$ sind beispielsweise:
Methyl-, Äthyl-, n-Propyl-, iso-Propyl-, n-Butyl-, iso-Butyl-, ß-Hydroxyäthyl-, ß-Methoxyäthyl-, ß-Äthoxyäthyl-, ß-n-Propoxyäthyl-, ß-iso-Propoxyäthyl-, ß-n-Butoxyäthyl-, ß-iso-Butoxyäthyl-, γ-Methoxypropyl-, γ-Äthoxypropyl-, γ-iso-Propoxypropyl-, ß- und γ-Hydroxypropyl-, 2-Methyl-3-hydroxypropyl-2-, α-Hydroxymethylpropyl-, ß-(ß'-Hydroxyäthoxy)-äthyl-, γ-(δ'-Hydroxybutoxy)-propyl-, γ-(ß'-Hydroxyäthoxy)-propyl-, 8-Hydroxy-3,6-dioxaoctyl-, 4,7,10-Trioxadodecyl-, ß-Dimethylaminoäthyl-, γ-Dimethylaminopropyl-, Cyclohexyl-, Benzyl-, 4-Aminobenzyl-, ß-Phenyläthyl-, 2-Methylcyclohexyl-1-, Acetyl-, Propionyl-, Butyryl-, Benzoyl-, Acryloyl-, ß-Chlorpropionyl-, Methoxycarbonyl-, Äthoxycarbonyl-, Nitro-, Amino-, Methylamino-, Dimethylamino-, Phenylamino-, 3- und 4-Sulfophenylamino-, Cyan-, Carbamoyl-, N-Methylcarbamoyl-, N,N-Dimethylcarbamoyl-, N-Äthylcarbamoyl-, N,N-Diäthylcarbamoyl-, N-Phenylcarbamoyl-, Phenyl-, 4-Methylaminophenyl-, 2-, 3- und 4-Chlorphenyl-, 2-, 3- und 4-Methoxyphenyl-, 2-, 3- und 4-Methylphenyl-, 2-Methoxy-5-methylphenyl-, 2-, 3- und 4-Sulfophenyl-, 3- und 4-Carboxyphenyl-, 2-, 3- und 4-Methoxycarbonylphenyl-, 3- und 4-Nitrophenyl-, 3- und 4-Aminophenyl-, 4-Sulfamoylphenyl-, Phenylaminocarbonyl-, ß-Aminoäthyl-, γ-Aminopropyl- und δ-Aminobutyl-, Benzimidazolyl-2- und Benzthiazolyl-2-imino, Benzoxazolyl-2-imino, 3- oder 4-(ß-Hydroxyäthyl)-sulfonyl-, 3- oder 4-(ß-Sulfatoäthyl)-sulfonyl-, 3- oder 4-(ß-Chloräthyl)-sulfonyl- und 3- oder 4-Vinylsulfonylphenylimino.

Gegebenenfalls substituierte Iminoreste Y sind beispielsweise:
Methyl-, Äthyl-, n-Propyl-, iso-Propyl-, n-Butyl-, iso-Butyl-, ß-Hydroxyäthyl-, ß-Methoxyäthyl-, ß-Äthoxyäthyl-, ß-n-Propoxyäthyl-, ß-iso-Propoxyäthyl-, ß-n-Butoxyäthyl-, ß-iso-Butoxyäthyl-, γ-Methoxypropyl-, γ-Äthoxypropyl-, γ-iso-Propoxypropyl-, ß- und γ-Hydroxypropyl-, 2-Methyl-3-hydroxypropyl-2-, α-Hydroxymethylpropyl-, ß-(ß'-Hydroxyäthoxy)-äthyl-, γ-(δ'-Hydroxybutoxy)-propyl-, γ-(ß'-Hydroxyäthoxy)-propyl-, 8-Hydroxy-3,6-dioxaoctyl-, 4,7,10-Trioxadodecyl-, ß-Dimethylaminoäthyl-, γ-Dimethylaminopropyl-, Cyclohexyl-, Benzyl-, 4-Aminobenzyl-, ß-Phenyläthyl-, 2-Methylcyclohexyl-1-, Amino, Methylamino-, Dimethylamino-, Phenylamino-, 3- und 4-Sulfophenylamino-, Phenyl-, 4-Methylaminophenyl-, ß-Aminoäthyl-, γ-Aminopropyl- und δ-Aminobutyl-, 3- oder 4-(ß-Hydroxyäthyl)-sulfonyl-, 3- oder 4-(ß-Sulfatoäthyl)-sulfonyl-, 3- oder 4-(ß-Chloräthyl)-sulfonyl- und 3- oder 4-Vinylsulfonylphenylimino.

Reste $R^3$ sind neben Amino und Hydroxy mono- oder disubstituiertes Amino und gegebenenfalls substituiertes Alkoxy oder Aryloxy.

Einzelne Reste $R^3$ sind beispielsweise:
N,N-Dimethylamino, N,N-Diäthylamino, Di-n-propylamino, Diisopropylamino, Di-n-butylamino, Diisobutylamino, Di-s-butylamino, N-Äthylbutylamino, N-n-Propyl-s-butylamino, Di-2-methoxyäthylamino, Diäthanolamino, Diisopropanolamino, N-Methyläthanolamino, N-Butyläthanolamino, N-Cyclohexyläthanolamino, N-Methylisopropanolamino, N-Äthyl-N-(2-hydroxybutyl)-amino, N-Methylcyclohexylamino, N-Äthylcyclohexylamino, N-Methyl-N-phenylamino, N-Äthyl-N-phenylamino, Pyrrolidino, Piperidino, 4-Methylpiperidino, 2-Methylpiperidino, Morpholino, 1-Methyl-, 1-Äthyl- und 1-ß-Hydroxyäthylpiperazino, Methoxy, Äthoxy, Propoxy, Isopropoxy, Butoxy, Isobutoxy, ß-Methoxyäthoxy, ß-Äthoxyäthoxy, ß-Butoxyäthoxy, ß-Dimethylaminoäthoxy, ß-Diäthylaminoäthoxy, ß-Dibutylaminoäthoxy, γ-Methoxypropoxy, γ-Äthoxypropoxy, γ-Propoxypropoxy, γ-Isopropoxypropoxy, Phenoxy und Naphthoxy.

$R^1$ und $Y^1$ bzw. $R^1$ und $R^3$ zusammen können z. B. den Formeln

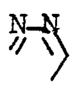 , 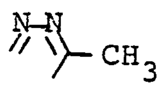 , 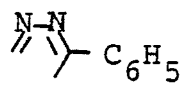 , 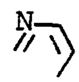 , 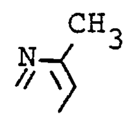 ,

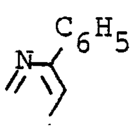 , 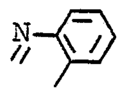 , 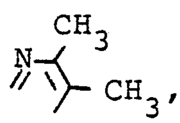 , 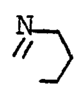 , 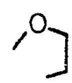 , 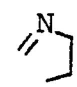

entsprechen.

Die Herstellung der Verbindungen der Formel I kann nach an sich bekannten Methoden erfolgen. Einzelheiten der Herstellung können den Beispielen entnommen werden, in denen sich Angaben über Teile und Prozente, sofern nicht anders vermerkt, auf das Gewicht beziehen.

Die neuen Farbstoffe eignen sich vorzüglich für die verschiedenen Reaktivfärbeverfahren. Man erhält Färbungen auf hydroxylgruppenhaltigen Fasermaterialien, insbesondere Baumwolle, die sich durch hohe Brillanz, Farbstärke, Licht- und Naßechtheiten auszeichnen.

Beispiel 1

Das Kondensationsprodukt aus 18,8 Teilen 1,3-Diaminobenzol-4-sulfonsäure und 19 Teilen Cyanurchlorid wird in 950 Teilen Eiswasser mit 6,9 Teilen Natriumnitrit und 60 Teilen Salzsäure (d = 1,09) 2 Stunden bei 0 - 5 °C gerührt. Dann wird überschüssiges Nitrit mit Sulfaminsäure zerstört, und die Diazokomponente zu 16 Teilen 2-Dimethylamino-4,6-dihydroxypyrimidin, die in 200 Teilen Wasser alkalisch gelöst wurden, gegeben. Die Kupplungsreaktion wird bei pH 7 zu Ende geführt, der ausgefallene Farbstoff abgesaugt, und das Nutschgut mit 100 Teilen einer gesättigten, neutralen Natriumphosphatlösung einmal gewaschen. Nach schonender Trocknung erhält man ein gelbes Pulver, welches Baumwolle z. B. nach dem Ausziehverfahren bei niedriger Temperatur in sehr brillanten, grünstichig gelben Tönen färbt.
In dem so hergestellten Farbstoff der Formel

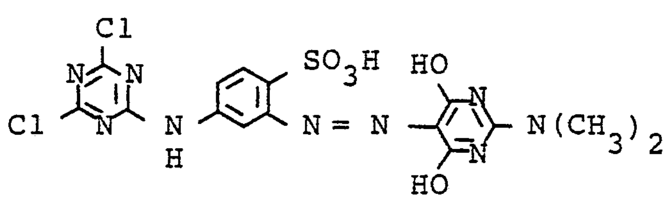

läßt sich bei 40 °C am Neutralpunkt mit aliphatischen oder aromatischen Aminen wie beispielsweise N-Methylanilin, 3-Aminobenzolsulfonsäure, N-Methyltaurin oder Ammoniak ein Chloratom des Triazinringes durch einen Aminrest ersetzen. Man erhält dann Farbstoffe mit ähnlich guten Eigenschaften.

Beispiel 2

Das durch Umsetzung einer neutralen Lösung von 28,2 Teilen Metaminsäure in 150 Teilen Wasser mit einer Suspension von 28 Teilen Cyanurchlorid in 160 Teilen Eiswasser bei pH 6 erhaltene Reaktionsgemisch wird tropfenweise mit einer neutralen Lösung von 25,9 Teilen Metanilsäure in 100 Teilen Wasser versetzt und auf 40 °C erwärmt. Mit Soda wird pH 6 eingestellt und gehalten, bis die Reaktion vollständig ist, was nach etwa 3 Stunden der Fall ist. Nun wird filtriert, das Filtrat mit 75 Teilen 18 %iger Salzsäure versetzt, auf 0 - 3 °C gekühlt und mit 10,4 Teilen Natriumnitrit diazotiert. Die mit Natriumacetat auf pH 3 - 4 abgestumpfte Diazoniumsalzsuspension läßt man in eine mit Natronlauge auf pH 8 eingestellte Suspension von 23,2 Teilen 2-Äthoxy-4-amino-6-hydroxypyrimidin in 400 Teilen Wasser fließen. Der pH-Wert wird während der Kupplung mit 20 %iger Natronlauge bei 7 - 7,5 gehalten, der fertige Farbstoff mit 150 Teilen Natriumchlorid ausgesalzen und abgesaugt. Er hat die Formel

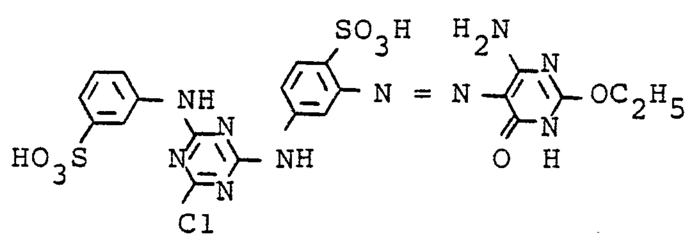

und färbt Cellulosematerial in gelben Tönen.

Beispiel 3

Eine neutrale Lösung von 50,6 Teilen Anilin-2,5-disulfosäure in 200 Teilen Wasser läßt man zu einer feinen Suspension von 40,4 Teilen Cyanurchlorid in 390 Teilen Eiswasser tropfen. Man rührt bei 0 - 3 °C, und hält durch Zugabe von Soda pH 6 aufrecht, bis kein diazotierbares Amin mehr nachweisbar ist. Dann läßt man eine neutrale Lösung von 37,6 Teilen Metaminsäure in 200 Teilen Wasser zutropfen und rührt bei 40 - 45 °C, wobei der pH-Wert bis zur Konstanz mit Soda bei 6 gehalten wird. Die erhaltene Lösung wird filtriert, bei 0 - 5 °C mit 100 Teilen 18 %iger Salzsäure versetzt und 3 Stunden lang mit 13,8 Teilen Natriumnitrit diazotiert. Dann werden unter Rühren 30,4 Teile 2-Cyanamino-4,6-dihydroxypyrimidin eingestreut, der pH-Wert durch Zugabe von Soda auf 7 gebracht und dabei gehalten, bis die Kupplung vollständig ist. Man salzt mit 200 Teilen Natriumchlorid aus, saugt den Farbstoff scharf ab und trocknet. Er färbt Cellulosematerial in brillanten grünstichig gelben Tönen an und entspricht der Formel

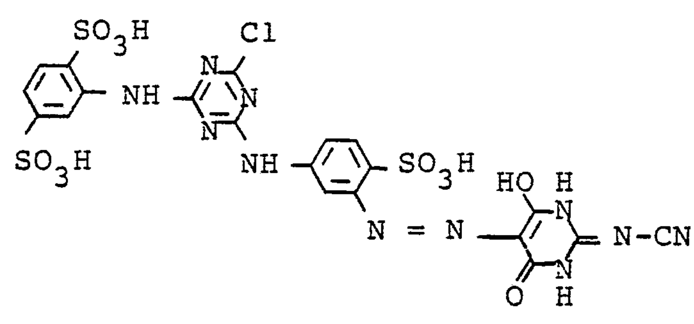

Wird in Beispiel 3 anstelle von Metaminsäure 2,6-Toluylendiamin-4-sulfonsäure bzw. 2,4-Toluylendiamin-5-sulfosäure und anstelle von 2-Cyanamino-4,6-dihydroxy-

pyrimidin 6-Amino-uracil eingesetzt, so erhält man Farbstoffe mit ähnlich guten Eigenschaften.

Beispiel 4

Das durch Umsetzung einer neutralen Lösung von 53,6 Teilen 1,3-Phenylendiamin-4,6-disulfonsäure in 200 Teilen Wasser mit einer Suspension von 38,4 Teilen Cyanurchlorid in 350 Teilen Eiswasser bei 0 - 5 °C und pH 6 erhaltene Reaktionsgemisch wird mit 100 Teilen Eis und 100 Teilen 18 %iger Salzsäure versetzt und mit 13,8 Teilen Natriumnitrit 4 Stunden lang diazotiert. Dann gibt man 7,1 Teile sekundäres und 15,2 Teile tertiäres Natriumphosphat zu und läßt die Diazoniumsalzsuspension in eine mit Natronlauge auf pH 8 eingestellte Suspension von 30,2 Teilen 2-Cyanamino-4-amino-6-hydroxypyrimidin fließen. Der pH-Wert wird mit verdünnter Natronlauge bis zur Vollständigkeit der Kupplung bei pH 6,8 - 7,2 gehalten. Der gebildete Farbstoff der Formel

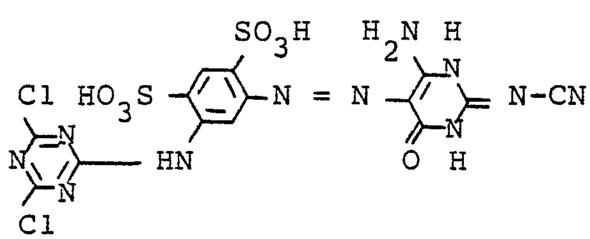

wird mit Natriumchlorid ausgesalzen, abgesaugt und getrocknet. Er färbt Cellulosematerial in gelben Tönen.

Wenn man in dem in Beispiel 4 beschriebenen Farbstoff eines der beiden Chloratome am Triazinring durch Umsetzung mit N-Methylanilin substituiert, so erhält man ebenfalls einen Farbstoff mit wertvollen Eigenschaften.

Die in Beispiel 1 bis 4 beschriebenen Farbstoffe entsprechen der allgemeinen Formel

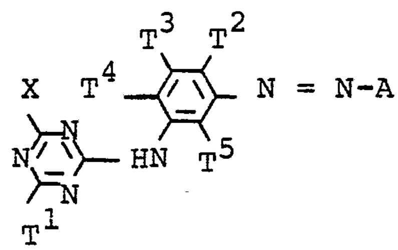

Weitere Farbstoffe mit ähnlich guten Eigenschaften, die nach einem der in Beispiel 1 bis 4 beschriebenen Wege erhalten werden können, und die oben genannter Formel entsprechen, sind in der Tabelle 1 zusammengefaßt.

Tabelle 1

| X | $T^1$ | $T^2$ | $T^3$ | $T^4$ | $T^5$ | A | Farbton |
|---|---|---|---|---|---|---|---|
| Cl | 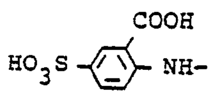 | $SO_3H$ | H | H | H | 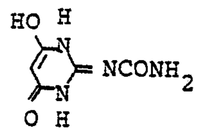 | gelb |
| F | 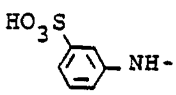 | " | " | " | " | " | " |
| Cl | 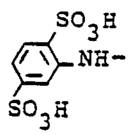 | " | " | " | " | " | " |
| " | 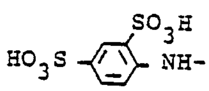 | " | " | " | " | " | " |
| " | 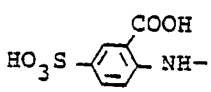 | " | " | " | " | " | " |
| " | 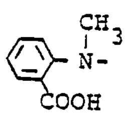 | " | " | " | " | " | " |
| " | 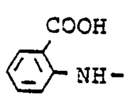 | " | " | " | " | " | " |
| " | 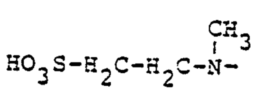 | " | " | " | " | " | " |

| X | $T^1$ | $T^2$ | $T^3$ | $T^4$ | $T^5$ | A | Farbton |
|---|---|---|---|---|---|---|---|
| Cl | $HO_3S-H_2C-H_2C-NH-$ | $SO_3H$ | H | H | H | 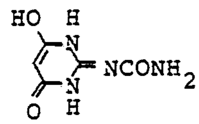 | gelb |
| " | 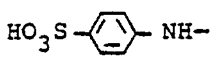 | " | " | " | " | " | " |
| " | 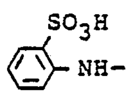 | " | " | " | " | " | " |
| " | 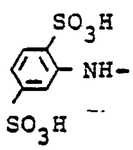 | " | " | $SO_3H$ | " | " | " |
| " | 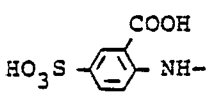 | " | " | " | " | " | " |
| " | 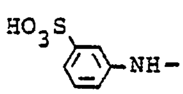 | " | " | " | " | " | " |
| " | 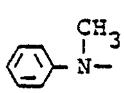 | " | " | " | " | " | " |
| " | Cl | " | " | H | " | " | " |
| " | " | " | H | $SO_3H$ | " | " | " |
| " | 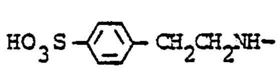 | " | " | " | " | " | " |

| X | $T^1$ | $T^2$ | $T^3$ | $T^4$ | $T^5$ | A | Farbton |
|---|---|---|---|---|---|---|---|
| Cl | 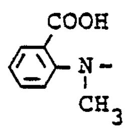 | $SO_3H$ | H | $SO_3H$ | H | 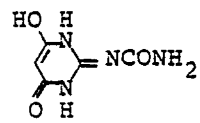 | gelb |
| " | 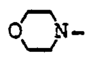 | " | " | " | " | " | " |
| " | 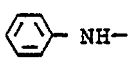 | " | " | " | " | " | " |
| " | 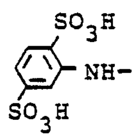 | H | $SO_3H$ | H | $CH_3$ | " | " |
| " | 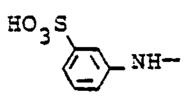 | " | " | " | " | " | " |
| " | 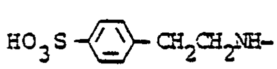 | " | " | " | " | " | " |
| " | 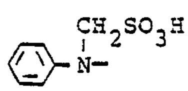 | " | " | " | " | " | " |
| " | 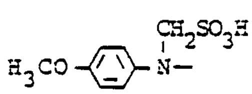 | " | " | " | " | " | " |
| " | $NH_2$ | $SO_3H$ | H | $SO_3H$ | H | " | " |
| " | 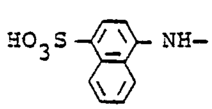 | " | " | " | " | " | " |

| X | $T^1$ | $T^2$ | $T^3$ | $T^4$ | $T^5$ | A | Farbton |
|---|---|---|---|---|---|---|---|
| Cl | 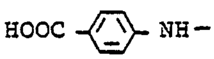 | $SO_3H$ | H | $SO_3H$ | H | 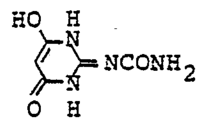 | gelb |
| " | 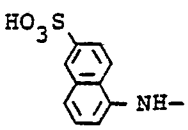 | " | " | " | " | " | " |
| " | 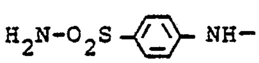 | " | " | " | " | " | " |
| " | 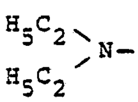 | " | " | " | " | " | " |
| " | $H_5C_2NH-$ | " | " | " | " | " | " |
| " | $(HO-H_4C_2)_2N-$ | H | $SO_3H$ | H | $CH_3$ | " | " |
| " | Cl | " | " | " | " | " | " |
| " | 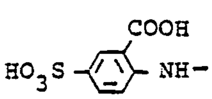 | " | " | " | " | " | " |
| " | 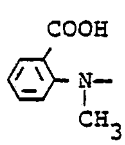 | " | " | " | " | " | " |
| " | $NH_2$ | " | " | " | " | " | " |

| X | $T^1$ | $T^2$ | $T^3$ | $T^4$ | $T^5$ | A | Farbton |
|---|---|---|---|---|---|---|---|
| Cl | $NH_2$ | $SO_3H$ | H | H | H | 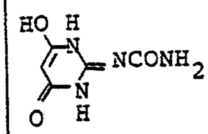 | gelb |
| " | " | " | " | $CH_3$ | " | " | " |
| " | 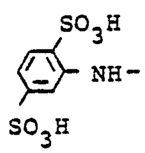 | " | " | " | " | " | " |
| " | 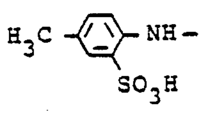 | " | " | " | " | " | " |
| " | 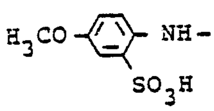 | " | " | " | " | " | " |
| " | 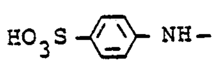 | " | " | " | " | " | " |
| " | 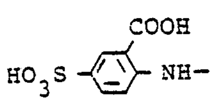 | " | " | " | " | " | " |
| " | 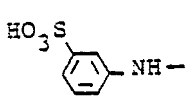 | " | " | " | " | " | " |
| " | 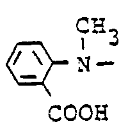 | " | " | " | " | " | " |

| X | $T^1$ | $T^2$ | $T^3$ | $T^4$ | $T^5$ | A | Farbton |
|---|---|---|---|---|---|---|---|
| Cl | 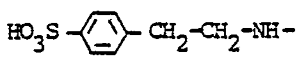 | $SO_3H$ | H | $CH_3$ | H | 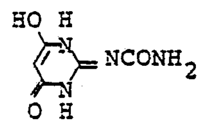 | gelb |
| " | 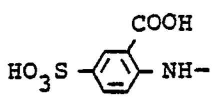 | " | " | H | H | 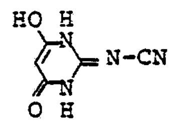 | " |
| " | 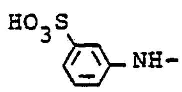 | " | " | " | " | " | " |
| " | 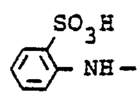 | " | " | " | " | " | " |
| " | 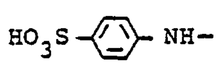 | " | " | " | " | " | " |
| " | 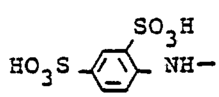 | " | " | " | " | " | " |
| " | 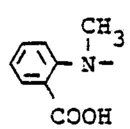 | " | " | " | " | " | " |
| " | 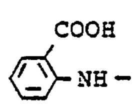 | " | " | " | " | " | " |
| " | $HO_3S-H_2C-H_2C-NH-$ | " | " | " | " | " | " |

| X | $T^1$ | $T^2$ | $T^3$ | $T^4$ | $T^5$ | A | Farbton |
|---|---|---|---|---|---|---|---|
| Cl | 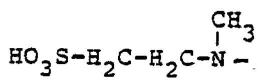 | $SO_3H$ | H | H | H | 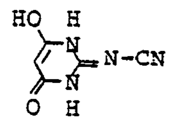 | gelb |
| " | 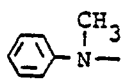 | " | " | " | " | " | " |
| " | Cl | " | " | " | " | " | " |
| " | 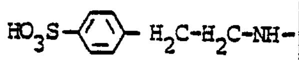 | " | " | " | " | " | " |
| " | 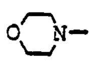 | " | " | " | " | " | " |
| " | 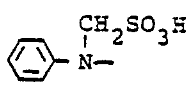 | " | " | " | " | " | " |
| " | 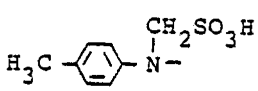 | " | " | " | " | " | " |
| " | $NH_2$ | " | " | " | " | " | " |
| " | 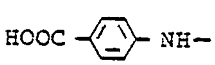 | " | " | " | " | " | " |
| " | 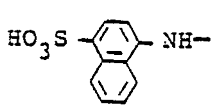 | " | " | " | " | " | " |

| X | $T^1$ | $T^2$ | $T^3$ | $T^4$ | $T^5$ | A | Farbton |
|---|---|---|---|---|---|---|---|
| Cl | 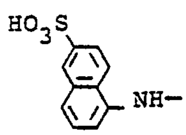 | $SO_3H$ | H | H | H | 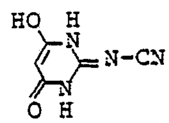 | gelb |
| " | 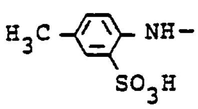 | " | " | " | " | " | " |
| " | 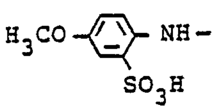 | " | " | " | " | " | " |
| " | 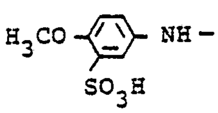 | " | " | " | " | " | " |
| " | $(HO-H_2C-H_2C)_2N-$ | " | " | " | " | " | " |
| " | $HOH_2CH_2C(OH_2CH_2C)_2-NH-$ | " | " | " | " | " | " |
| " | 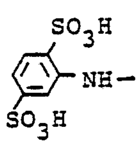 | " | " | $SO_3H$ | " | " | " |
| " | 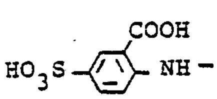 | " | " | " | " | " | " |
| F | 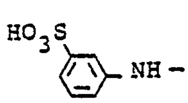 | " | " | " | " | " | " |

| X | $T^1$ | $T^2$ | $T^3$ | $T^4$ | $T^5$ | A | Farbton |
|---|---|---|---|---|---|---|---|
| Cl | 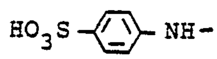 | $SO_3H$ | H | $SO_3H$ | H | 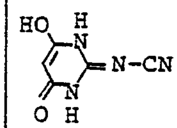 | gelb |
| " | 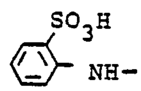 | " | " | " | " | " | " |
| " | 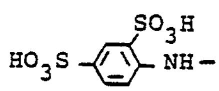 | " | " | " | " | " | " |
| " | 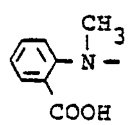 | " | " | " | " | " | " |
| " | 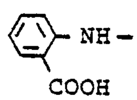 | " | " | " | " | " | " |
| " | 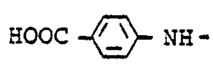 | " | " | " | " | " | " |
| " | $HO_3S-H_2C-H_2C-NH-$ | " | " | " | " | " | " |
| " | $HO_3S-H_2C-H_2C-N(CH_3)-$ | " | " | " | " | " | " |
| " | 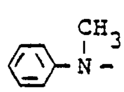 | " | " | " | " | " | " |

| X | $T^1$ | $T^2$ | $T^3$ | $T^4$ | $T^5$ | A | Farbton |
|---|---|---|---|---|---|---|---|
| Cl | 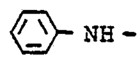 | $SO_3H$ | H | $SO_3H$ | H | 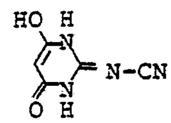 | gelb |
| " | 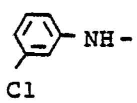 | " | " | " | " | " | " |
| " | 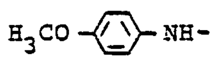 | " | " | " | " | " | " |
| " | 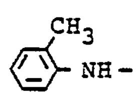 | " | " | " | " | " | " |
| " | 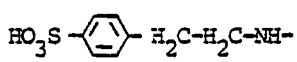 | " | " | " | " | " | " |
| " | 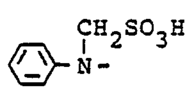 | " | " | " | " | " | " |
| " | 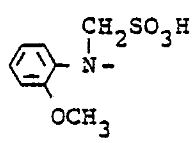 | " | " | " | " | " | " |
| " | 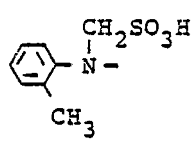 | " | " | " | " | " | " |
| " | 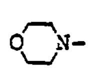 | " | " | " | " | " | " |

| X | $T^1$ | $T^2$ | $T^3$ | $T^4$ | $T^5$ | A | Farbton |
|---|---|---|---|---|---|---|---|
| Cl | $HO-H_2C-H_2C$<br>$HO-H_2C-H_2C$ $N-$ | $SO_3H$ | H | $SO_3H$ | H | 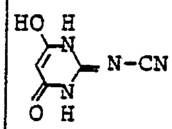 | gelb |
| " | $HOH_2CH_2C(OH_2CH_2C)_2-NH-$ | " | " | " | " | " | " |
| " | $NH_2$ | " | " | " | " | " | " |
| " | 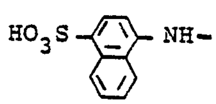 | " | " | " | " | " | " |
| " | 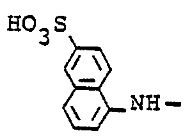 | " | " | " | " | " | " |
| " | 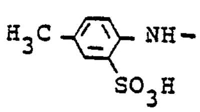 | " | " | " | " | " | " |
| " | 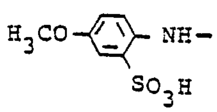 | " | " | " | " | " | " |
| " | 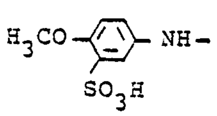 | " | " | " | " | " | " |
| " | 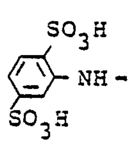 | H | $SO_3H$ | H | $CH_3$ | " | " |

| X | $T^1$ | $T^2$ | $T^3$ | $T^4$ | $T^5$ | A | Farbton |
|---|---|---|---|---|---|---|---|
| Cl | 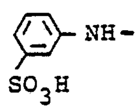 | H | $SO_3H$ | H | $CH_3$ | 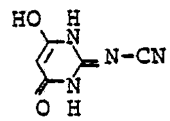 | gelb |
| " | 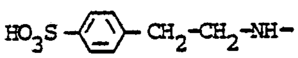 | " | " | " | " | " | " |
| " | 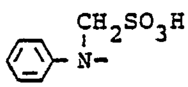 | " | " | " | " | " | " |
| " | $NH_2$ | " | " | " | " | " | " |
| " | 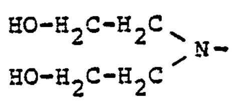 | " | " | " | " | " | " |
| " | Cl | " | " | " | " | " | " |
| " | 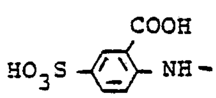 | " | " | " | " | " | " |
| " | 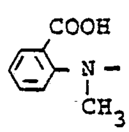 | " | " | " | " | " | " |
| " | 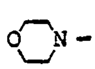 | " | " | " | " | " | " |
| " | $HO_3S-H_2C-H_2C-NH-$ | " | " | " | " | " | " |

| X | $T^1$ | $T^2$ | $T^3$ | $T^4$ | $T^5$ | A | Farbton |
|---|---|---|---|---|---|---|---|
| Cl | 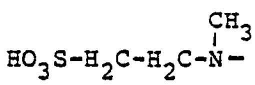 | H | $SO_3H$ | H | $CH_3$ | 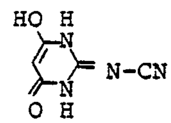 | gelb |
| " | 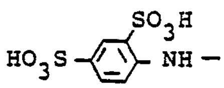 | " | " | " | " | " | " |
| " | 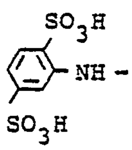 | $SO_3H$ | H | $CH_3$ | H | " | " |
| " | 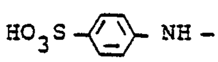 | " | " | " | " | " | " |
| " | 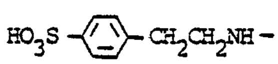 | " | " | " | " | " | " |
| " | 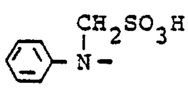 | " | " | " | " | " | " |
| " | 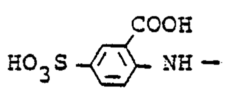 | " | " | " | " | " | " |
| " | 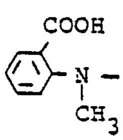 | " | " | " | " | " | " |
| " | $HO_3SH_2CH_2C-NH-$ | " | " | " | " | " | " |

| X | $T^1$ | $T^2$ | $T^3$ | $T^4$ | $T^5$ | A | Farbton |
|---|---|---|---|---|---|---|---|
| Cl | 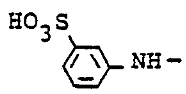 | $SO_3H$ | H | H | H | 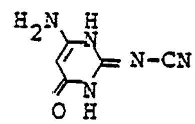 | gelb |
| " | 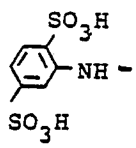 | " | " | " | " | " | " |
| " | $NH_2$ | " | " | " | " | " | " |
| " | Cl | " | " | " | " | " | " |
| " | 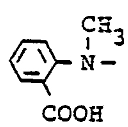 | " | " | " | " | " | " |
| " | 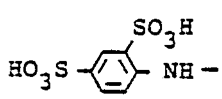 | " | " | " | " | " | " |
| " | 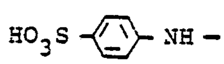 | " | " | " | " | " | " |
| " | 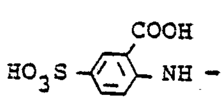 | " | " | " | " | " | " |
| " | $HO_3S-H_2C-H_2C-NH-$ | " | " | " | " | " | " |
| " | 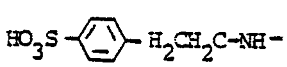 | " | " | " | " | " | " |

| X | $T^1$ | $T^2$ | $T^3$ | $T^4$ | $T^5$ | A | Farbton |
|---|---|---|---|---|---|---|---|
| Cl | 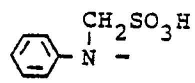 | $SO_3H$ | H | H | H | 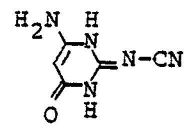 | gelb |
| " | 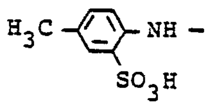 | " | " | " | " | " | " |
| " | 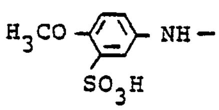 | " | " | " | " | " | " |
| " | 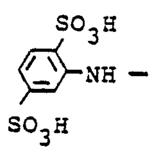 | " | " | $SO_3H$ | " | " | " |
| " | 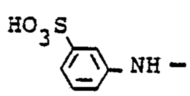 | " | " | " | " | " | " |
| " | 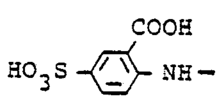 | " | " | " | " | " | " |
| " | 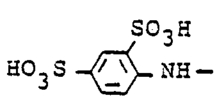 | " | " | " | " | " | " |
| " | 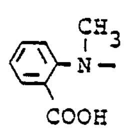 | " | " | " | " | " | " |

| X | $T^1$ | $T^2$ | $T^3$ | $T^4$ | $T^5$ | A | Farbton |
|---|---|---|---|---|---|---|---|
| Cl | 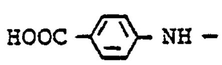 | $SO_3H$ | H | $SO_3H$ | H | 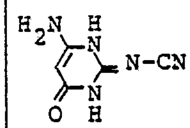 | gelb |
| " | $HO_3S-H_2C-H_2C-NH-$ | " | " | " | " | " | " |
| " | 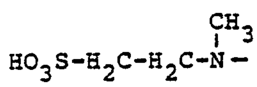 | " | " | " | " | " | " |
| F | 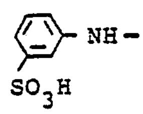 | " | " | H | " | " | " |
| Cl | 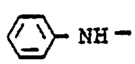 | " | " | $SO_3H$ | " | " | " |
| " | 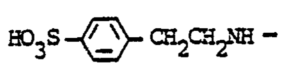 | " | " | " | " | " | " |
| " | 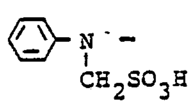 | " | " | " | " | " | " |
| " | 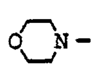 | " | " | " | " | " | " |
| " | 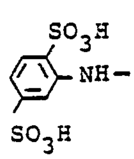 | H | $SO_3H$ | H | $CH_3$ | " | " |
| " | 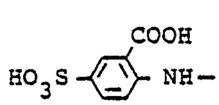 | " | " | " | " | " | " |

| X | $T^1$ | $T^2$ | $T^3$ | $T^4$ | $T^5$ | A | Farbton |
|---|---|---|---|---|---|---|---|
| Cl | $HO_3S-H_2C-H_2C-NH-$ | H | $SO_3H$ | H | $CH_3$ | 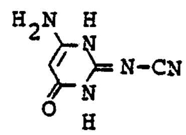 | gelb |
| " | 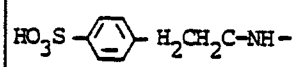 | " | " | " | " | " | " |
| " | 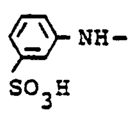 | " | " | " | " | " | " |
| " | 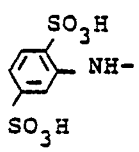 | $SO_3H$ | H | $CH_3$ | H | " | " |
| " | 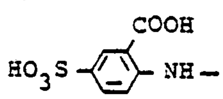 | " | " | " | " | " | " |
| " | 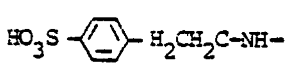 | " | " | " | " | " | " |
| " | 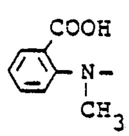 | " | " | " | " | " | " |
| " | $HO_3S-H_2C-H_2C-NH-$ | " | " | " | " | " | " |
| " | Cl | " | " | H | " | 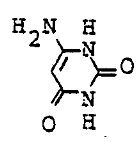 | " |

| X | $T^1$ | $T^2$ | $T^3$ | $T^4$ | $T^5$ | A | Farbton |
|---|---|---|---|---|---|---|---|
| Cl | $NH_2$ | $SO_3H$ | H | H | H | 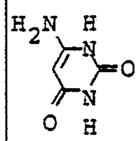 | gelb |
| " | 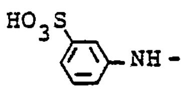 | " | " | " | " | " | " |
| " | 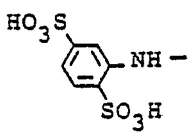 | " | " | " | " | " | " |
| " | $HO_3S-H_2C-H_2C-NH-$ | " | " | " | " | " | " |
| " | $HO_3S-H_2C-H_2C-N(CH_3)-$ | " | " | " | " | " | " |
| " | 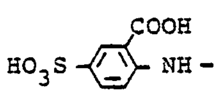 | " | " | " | " | " | " |
| " | Cl | " | " | $SO_3H$ | " | " | " |
| " | 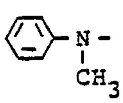 | " | " | " | " | " | " |
| " | 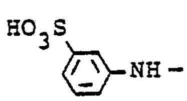 | " | " | " | " | " | " |

| X | $T^1$ | $T^2$ | $T^3$ | $T^4$ | $T^5$ | A | Farbton |
|---|---|---|---|---|---|---|---|
| Cl | 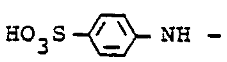 | $SO_3H$ | H | $SO_3H$ | H | 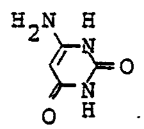 | gelb |
| " | 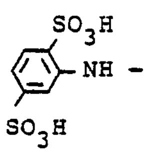 | " | " | " | " | " | " |
| " | 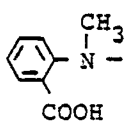 | " | " | " | " | " | " |
| " | $HO_3SH_2CH_2C-N(CH_3)-$ | " | " | " | " | " | " |
| " | 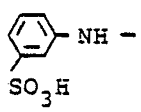 | H | $SO_3H$ | H | $CH_3$ | " | " |
| F | 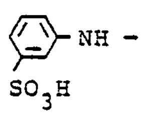 | $SO_3H$ | H | " | H | " | " |
| Cl | 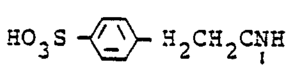 | H | $SO_3H$ | " | $CH_3$ | " | " |
| " | 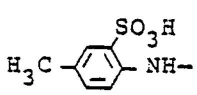 | $SO_3H$ | H | $CH_3$ | H | " | " |

| X | $T^1$ | $T^2$ | $T^3$ | $T^4$ | $T^5$ | A | Farbton |
|---|---|---|---|---|---|---|---|
| Cl | 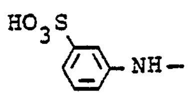 | $SO_3H$ | H | $CH_3$ | H | 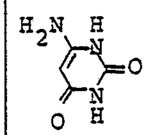 | gelb |
| " | 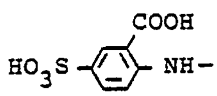 | " | " | " | " | " | " |
| " | 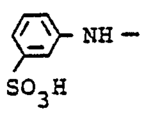 | " | " | " | " | " | " |
| " | 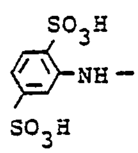 | " | " | H | " | 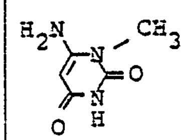 | " |
| " | 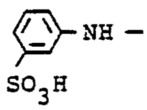 | " | " | " | " | " | " |
| " | 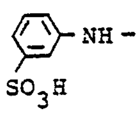 | " | " | " | " | 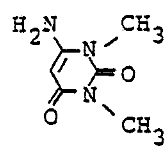 | " |
| " | 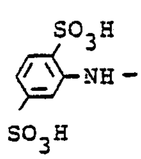 | " | " | " | " | " | " |

| X | $T^1$ | $T^2$ | $T^3$ | $T^4$ | $T^5$ | A | Farbton |
|---|---|---|---|---|---|---|---|
| Cl | 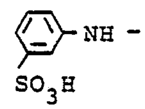 | $SO_3H$ | H | H | H | 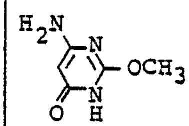 | gelb |
| " | Cl | " | " | " | " | " | " |
| " | 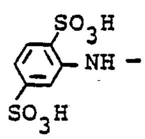 | " | " | " | " | " | " |
| " | 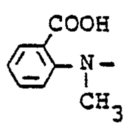 | " | " | " | " | " | " |
| " | Cl | " | " | " | " | 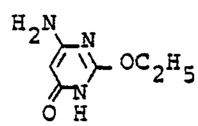 | " |
| " | 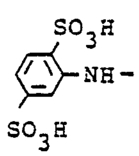 | " | " | " | " | " | " |
| " | 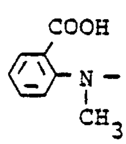 | " | " | " | " | " | " |
| " | 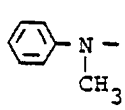 | " | " | " | " | 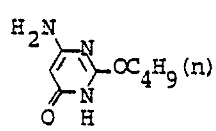 | " |

| X | $T^1$ | $T^2$ | $T^3$ | $T^4$ | $T^5$ | A | Farbton |
|---|---|---|---|---|---|---|---|
| Cl | 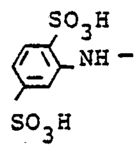 | $SO_3H$ | H | H | H | 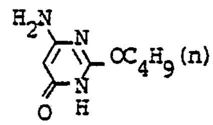 | gelb |
| " | Cl | " | " | " | " | " | " |
| " | 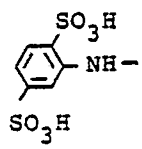 | " | " | " | " | 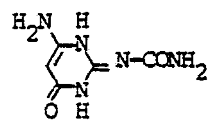 | " |
| " | 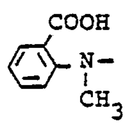 | " | " | " | " | " | " |
| " | Cl | " | " | " | " | 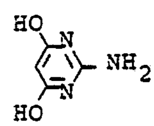 | " |
| " | 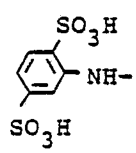 | " | " | " | " | " | " |
| " | $HO_3S-CH_2CH_2-\overset{\mid}{N}-CH_3$ | " | " | " | " | " | " |
| " | $HO(CH_2)_2O(CH_2)_2O(CH_2)_2\overset{\mid}{N}H$ | " | " | " | " | " | " |
| " | Cl | " | " | $SO_3H$ | " | " | " |

| X | $T^1$ | $T^2$ | $T^3$ | $T^4$ | $T^5$ | A | Farbton |
|---|---|---|---|---|---|---|---|
| Cl | $-NH_2$ | $SO_3H$ | H | $SO_3H$ | H | 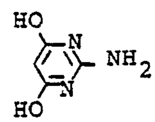 | gelb |
| F | 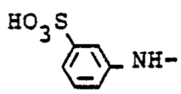 | " | " | " | " | " | " |
| " | 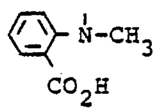 | " | " | " | " | " | " |
| " | 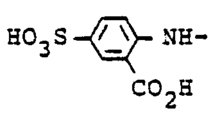 | H | $SO_3H$ | H | $CH_3$ | " | " |
| Cl | 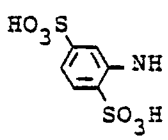 | $SO_3H$ | H | $CH_3$ | H | " | " |
| " | 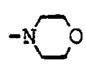 | " | " | $SO_3H$ | " | " | " |
| " | $CH_3O-CH_2-CH_2-NH-$ | " | " | " | " | " | " |
| " | $(CH_3)_2CH-O-CH_2CH_2-NH-$ | " | " | " | " | " | " |
| " | 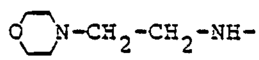 | " | " | " | " | " | " |
| " | 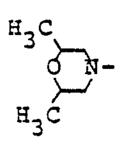 | " | " | " | " | " | " |

| X | $T^1$ | $T^2$ | $T^3$ | $T^4$ | $T^5$ | A | Farbton |
|---|---|---|---|---|---|---|---|
| Cl | $n-C_4H_9-O-(CH_2)_2-NH$ | $SO_3H$ | H | H | H | 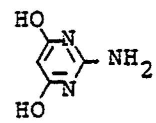 | gelb |
| F | 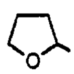 $CH_2-NH-$ | " | " | " | " | " | " |
| Cl | $HO-(CH_2)_3-NH-$ | " | " | " | " | " | " |
| " | $(CH_3)_2N-(CH_2)_3-NH-$ | " | " | " | " | " | " |
| " | 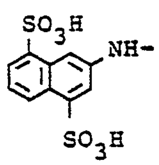 | " | " | " | " | " | " |
| " | Cl | " | " | $SO_3H$ | " | 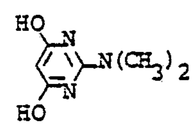 | " |
| F | 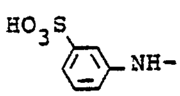 | " | " | " | " | " | " |
| Cl | $NH_2$ | " | " | " | " | " | " |
| " | 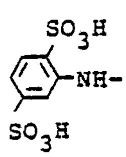 | " | " | H | " | " | " |

| X | $T^1$ | $T^2$ | $T^3$ | $T^4$ | $T^5$ | A | Farbton |
|---|---|---|---|---|---|---|---|
| Cl | $HO_3S-(CH_2)_2-NH-$ | $SO_3H$ | H | H | H | 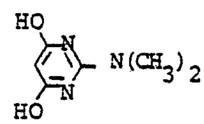 | gelb |
| " | 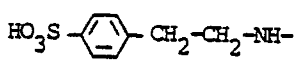 | " | " | " | " | " | " |
| F | 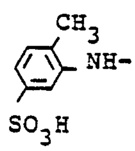 | " | " | " | " | " | " |
| Cl | 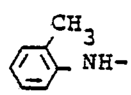 | " | " | $SO_3H$ | " | " | " |
| " | Cl | " | " | " | " | " | " |
| " | 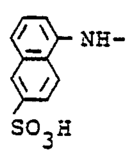 | " | " | " | " | " | " |
| " | $NH_2$ | " | " | " | " | " | " |
| " | Cl | " | " | H | " | 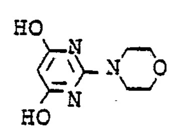 | " |
| " | $NH_2$ | " | " | " | " | " | " |

| X | $T^1$ | $T^2$ | $T^3$ | $T^4$ | $T^5$ | A | Farbton |
|---|---|---|---|---|---|---|---|
| Cl | $HO_3S-(CH_2)_2-\underset{\vert}{N}-CH_3$ | $SO_3H$ | H | H | H | 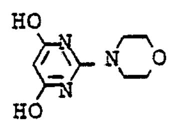 | gelb |
| " | 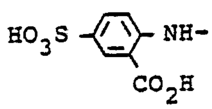 | " | " | $CH_3$ | " | " | " |
| " | 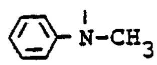 | " | " | $SO_3H$ | " | " | " |
| " | 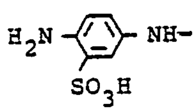 | " | " | " | " | " | " |
| " | Cl | " | " | H | " | 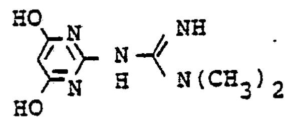 | " |
| " | 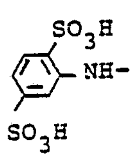 | " | " | " | " | " | " |
| " | $C_2H_5-O-C_2H_4-NH-$ | " | " | $SO_3H$ | " | " | " |
| " | 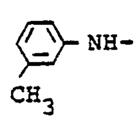 | " | " | " | " | " | " |
| " | 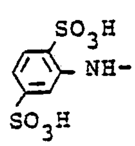 | " | " | H | " | 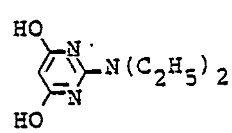 | " |

| X | $T^1$ | $T^2$ | $T^3$ | $T^4$ | $T^5$ | A | Farbton |
|---|---|---|---|---|---|---|---|
| Cl | 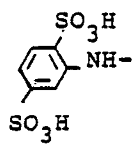 | $SO_3H$ | H | H | H | 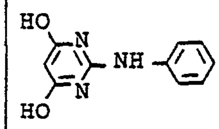 | gelb |
| " | " | " | " | " | " | 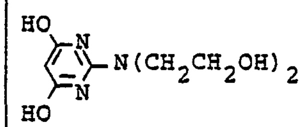 | " |
| " | " | " | " | " | " | 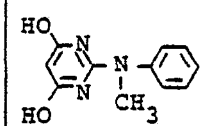 | " |
| " | $NH_2$ | " | " | $SO_3H$ | " | " | " |
| " | 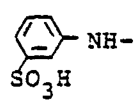 | " | " | " | " | 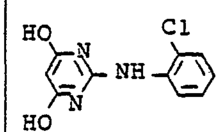 | " |
| " | Cl | " | " | " | " | 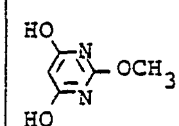 | " |
| " | $HO_3S-(CH_2)_2-\overset{\vert}{N}-CH_3$ | " | " | H | " | " | " |
| " | 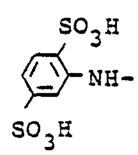 | " | " | " | " | " | " |

| X | $T^1$ | $T^2$ | $T^3$ | $T^4$ | $T^5$ | A | Farbton |
|---|---|---|---|---|---|---|---|
| F | 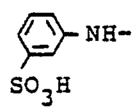 | $SO_3H$ | H | H | H | 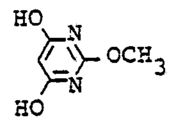 | gelb |
| Cl | Cl | " | " | " | " | 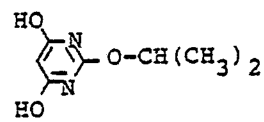 | " |
| " | 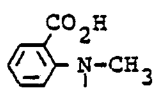 | " | " | " | " | " | " |
| " | 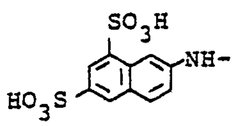 | " | " | " | " | " | " |
| F | 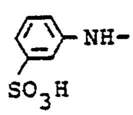 | " | " | $SO_3H$ | " | " | " |
| Cl | 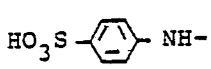 | " | " | H | " | 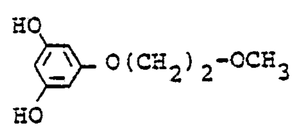 | " |
| " | " | " | " | " | " | 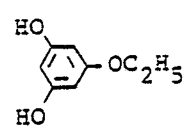 | " |
| " | Cl | " | " | $SO_3H$ | " | 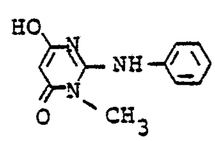 | " |

| X | $T^1$ | $T^2$ | $T^3$ | $T^4$ | $T^5$ | A | Farbton |
|---|---|---|---|---|---|---|---|
| Cl | 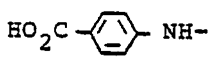 | $SO_3H$ | H | H | H | 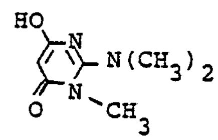 | gelb |
| " | Cl | " | " | $SO_3H$ | " | 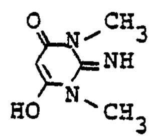 | " |
| " | " | " | " | " | " | 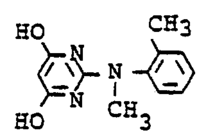 | " |
| Cl | 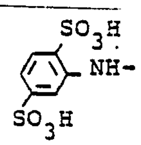 | " | " | " | " | 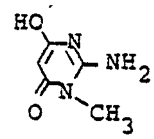 | " |
| Cl | 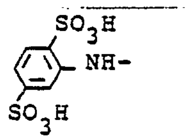 | $SO_3H$ | H | H | H | 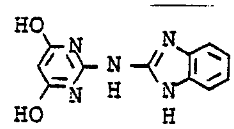 | gelb |
| " | " | " | " | " | " | 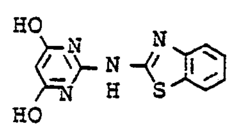 | " |
| " | " | " | " | " | " | 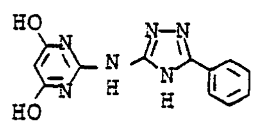 | " |
| " | Cl | " | " | $SO_3H$ | " | 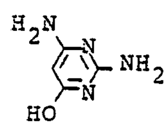 | " |
| " | $NH_2$ | " | " | " | " | " | " |
| " | $HO_3S-(CH_2)_2\overset{\vert}{N}-CH_3$ | " | " | " | " | " | " |
| " | Cl | " | " | H | " | " | " |

| X | $T^1$ | $T^2$ | $T^3$ | $T^4$ | $T^5$ | A | Farbton |
|---|---|---|---|---|---|---|---|
| " | 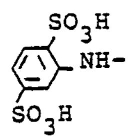 | " | " | " | " | " | " |
| " | " | " | " | " | " | 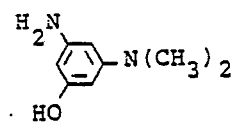 | " |
| Cl | 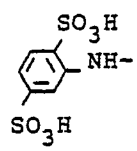 | $SO_3H$ | H | H | H | 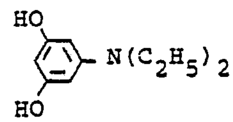 | gelb |
| " | " | " | " | " | " | 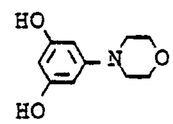 | " |
| " | " | " | " | " | " | 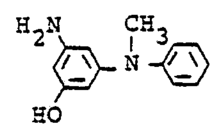 | " |
| F | 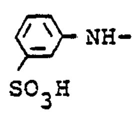 | " | " | " | " | 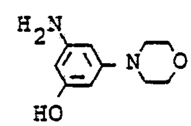 | " |
| Cl | $CH_3O-CH_2-CH_2-NH-$ | " | " | $SO_3H$ | " | 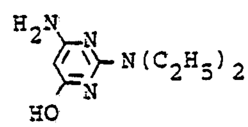 | " |
| " | 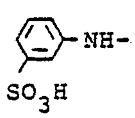 | " | " | H | " | 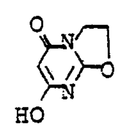 | " |
| " | 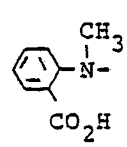 | " | " | " | " | 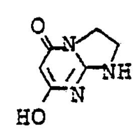 | " |
| " | 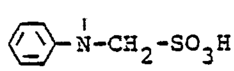 | " | " | " | " | 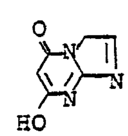 | " |

Beispiel 5

37,6 Teile Metaminsäure werden in 200 Teilen Wasser bei pH 6,5 gelöst und bei 0 - 5 °C mit einer Suspension von 38,4 Teilen Cyanurchlorid in 250 Teilen Eiswasser umgesetzt, wobei mit Soda ein pH-Wert von 6 aufrechterhalten wird. Sobald der pH-Wert ohne weitere Sodazugabe konstant bleibt, wird nach Zugabe von 100 Teilen 18 %iger Salzsäure mit 13,8 Teilen Natriumnitrit bei 0 - 5 °C 2 Stunden lang diazotiert. Dann gibt man 7,1 Teile sekundäres und 15,2 Teile tertiäres Natriumphosphat zu und läßt die Diazoniumsalzsuspension zu einer mit Natronlauge auf pH 8 eingestellten Suspension von 15,2 Teilen 2-Cyanamino-4,6-dihydroxypyrimidin in 400 Teilen Wasser fließen und hält während der Kupplung mit verdünnter Natronlauge einen pH-Wert von 6,8 - 7,3 aufrecht. Nach 1 1/2 Stunden streut man 33,4 Teile 4,4'-Diaminodiphenyl-2,2'-disulfosäure ein und rührt 3 Stunden lang bei 40 - 45 °C, wobei der pH-Wert mit Soda bei 6 gehalten wird. Der gebildete Farbstoff wird mit Natriumchlorid ausgesalzen, abgesaugt und getrocknet. Er färbt Cellulosematerial in grünstichig gelben Tönen und entspricht der Formel

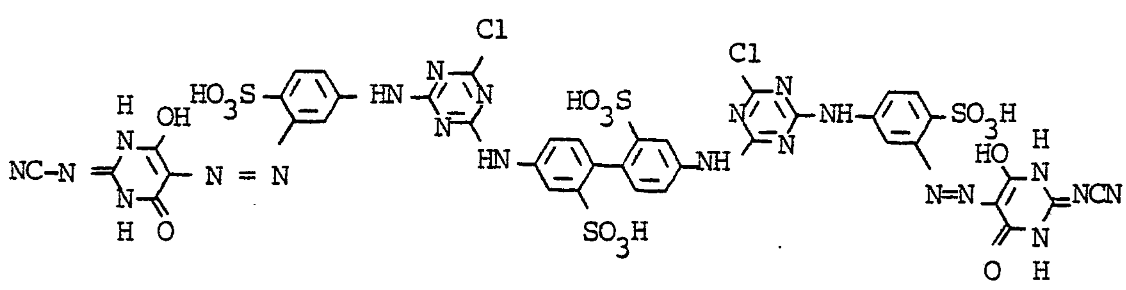

Der in Beispiel 5 beschriebene Farbstoff läßt sich durch die allgemeine Formel

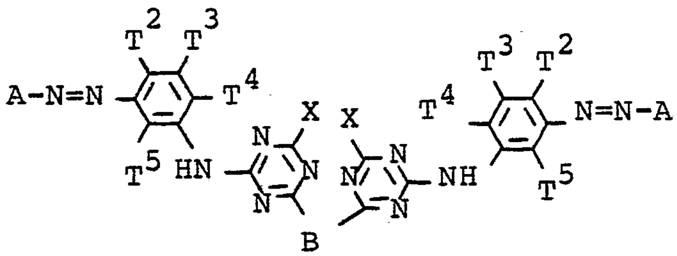

wiedergeben. Weitere Farbstoffe, die nach der Verfahrensweise von Beispiel 5 oder auf einem ähnlichen Weg hergestellt werden können und vergleichbar gute Eigenschaften aufweisen, sind in der Tabelle 2 zusammengefaßt.

Tabelle 2

| X | B | $T^2$ | $T^3$ | $T^4$ | $T^5$ | A | Farbton |
|---|---|---|---|---|---|---|---|
| Cl | 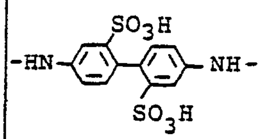 | $SO_3H$ | H | H | H | 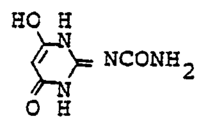 | gelb |
| " | 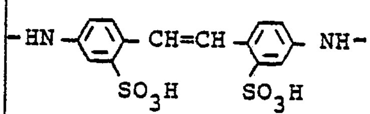 | " | " | " | " | " | " |
| " | 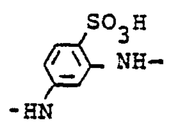 | " | " | " | " | " | " |
| " | 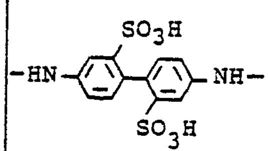 | " | " | $SO_3H$ | " | " | " |
| " | 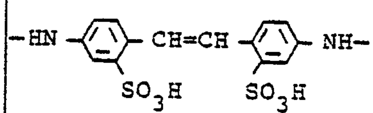 | " | " | " | " | " | " |
| " | 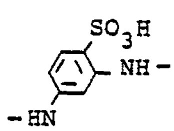 | " | " | " | " | " | " |
| " | 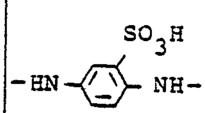 | " | " | " | " | " | " |

| X | B | $T^2$ | $T^3$ | $T^4$ | $T^5$ | A | Farbton |
|---|---|---|---|---|---|---|---|
| Cl | 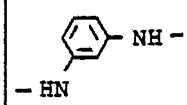 | $SO_3H$ | H | $SO_3H$ | H | 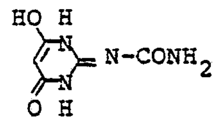 | gelb |
| " | 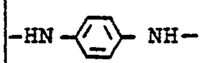 | " | " | " | " | " | " |
| " | $-HN-CH_2CH_2-NH-$ | " | " | " | " | " | " |
| " | $-HN-(CH_2)_3-NH-$ | " | " | " | " | " | " |
| " | $-HN-(CH_2)_4-NH-$ | " | " | " | " | " | " |
| " | 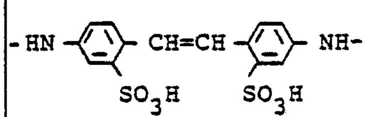 | " | " | H | " | 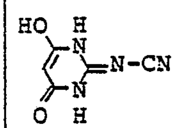 | " |
| " | 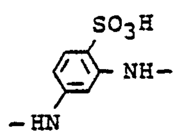 | " | " | " | " | " | " |
| " | 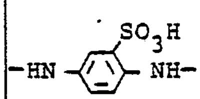 | " | " | " | " | " | " |
| " | 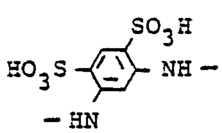 | " | " | " | " | " | " |

| X | B | $T^2$ | $T^3$ | $T^4$ | $T^5$ | A | Farbton |
|---|---|---|---|---|---|---|---|
| Cl | 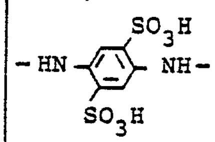 | $SO_3H$ | H | H | H | 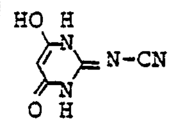 | gelb |
| " | 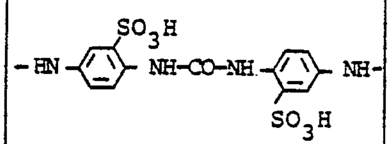 | " | " | " | " | " | " |
| " | 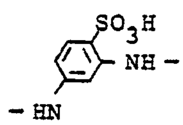 | " | " | $SO_3H$ | " | " | " |
| " | 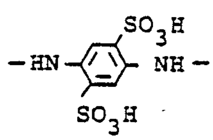 | " | " | " | " | " | " |
| " | 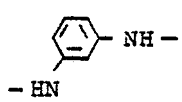 | " | " | " | " | " | " |
| " | 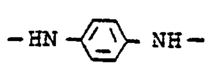 | " | " | " | " | " | " |
| " | $-HN-CH_2CH_2-NH-$ | " | " | " | " | " | " |
| " | $-HN-(CH_2)_3-NH-$ | " | " | " | " | " | " |
| " | $-HN-(CH_2)_4-NH-$ | " | " | " | " | " | " |

| X | B | $T^2$ | $T^3$ | $T^4$ | $T^5$ | A | Farbton |
|---|---|---|---|---|---|---|---|
| Cl | 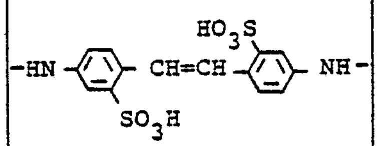 | $SO_3H$ | H | $SO_3H$ | H | 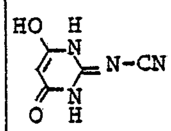 | gelb |
| " | 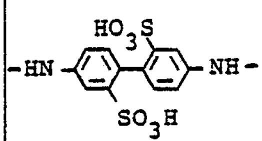 | " | " | " | " | " | " |
| " | 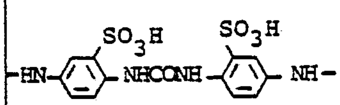 | " | " | " | " | " | " |
| " | 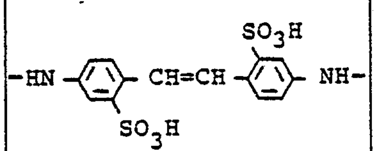 | " | " | $CH_3$ | " | " | " |
| " | " | H | $SO_3H$ | H | $CH_3$ | " | " |
| " | " | $SO_3H$ | H | " | H | 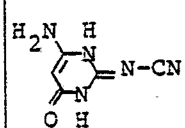 | " |
| " | 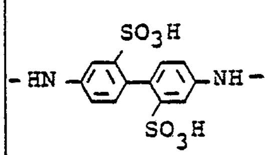 | " | " | " | " | " | " |
| " | 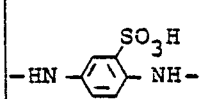 | " | " | " | " | " | " |

| X | B | $T^2$ | $T^3$ | $T^4$ | $T^5$ | A | Farbton |
|---|---|---|---|---|---|---|---|
| Cl | 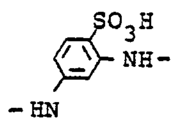 | $SO_3H$ | H | H | H | 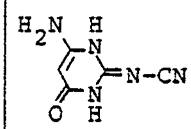 | gelb |
| " | 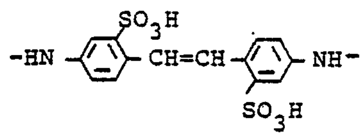 | " | " | $SO_3H$ | " | " | " |
| " | 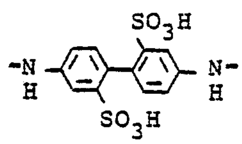 | " | " | " | " | " | " |
| " | $-HN-CH_2CH_2-NH-$ | " | " | " | " | " | " |
| " | $-HN-(CH_2)_4-NH-$ | " | " | " | " | " | " |
| " | 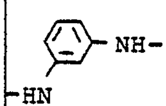 | " | " | " | " | " | " |
| " | 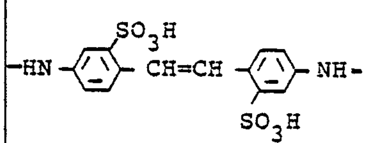 | " | " | " | " | 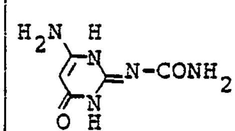 | " |
| " | " | " | " | " | " | 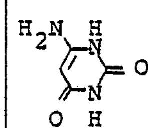 | " |
| " | " | H | $SO_3H$ | H | $SO_3H$ | " | " |

| X | B | $T^2$ | $T^3$ | $T^4$ | $T^5$ | A | Farbton |
|---|---|---|---|---|---|---|---|
| Cl | 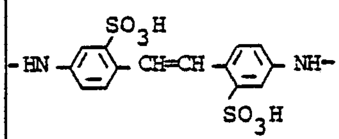 | $SO_3H$ | H | $CH_3$ | $SO_3H$ | 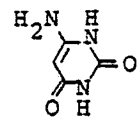 | gelb |
| " | " | " | " | H | H | 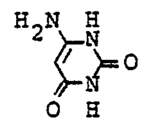 | " |
| " | " | " | " | " | " | 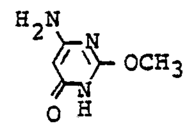 | " |
| " | " | " | " | " | " | 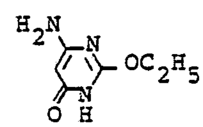 | " |
| " | " | " | " | " | " | 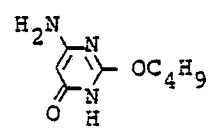 | " |
| " | 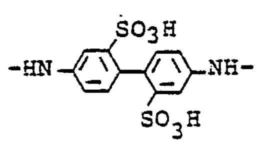 | " | " | " | " | 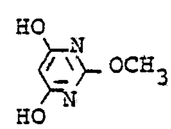 | " |
| " | " | " | " | " | " | 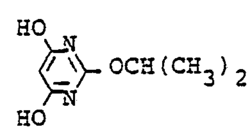 | " |

| X | B | $T^2$ | $T^3$ | $T^4$ | $T^5$ | A | Farbton |
|---|---|---|---|---|---|---|---|
| Cl | 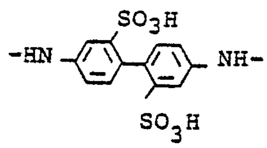 | $SO_3H$ | H | H | H | 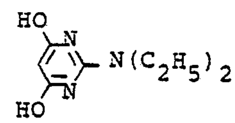 | gelb |
| " | " | " | " | " | " | 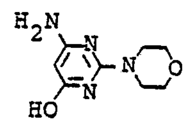 | " |
| " | 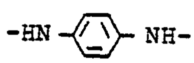 | " | " | $SO_3H$ | " | 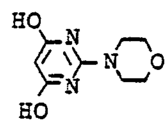 | " |
| " | 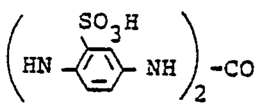 | " | " | H | " | 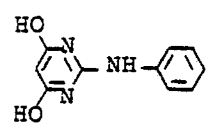 | " |

Beispiel 6

Eine neutrale Lösung von 26,8 Teilen 2,5-Diaminobenzol-1,4-disulfonsäure in 300 Teilen Eiswasser wird mit einer feinen Suspension von 19 Teilen Cyanurchlorid in 190 Teilen Eiswasser versetzt. Die Mischung wird bei 0 °C nach und nach mit insgesamt 4,5 Teilen Soda versetzt, so daß sich ein pH-Wert von 4,5 einstellt. Sobald keine Diaminoverbindung mehr nachweisbar ist, wird filtriert und in üblicher Weise eine Stunde mit 6,9 Teilen Natriumnitrit und 50 Teilen 5 N-Salzsäure diazotiert. Nach Zerstörung des Nitritüberschusses mit Sulfaminsäure wird mit einer alkalischen Lösung von 21 Teilen 2-Phenylamino-4,6-dihydroxypyrimidin in 400 Teilen Wasser versetzt, der pH-Wert der Mischung durch Zugabe von 42 Teilen 20 %iger Natronlauge auf 7 gebracht und dort gehalten, bis keine Diazokomponente mehr nachgewiesen werden kann. Nun werden 18 Teile N-Methylanthranilsäure hinzugefügt und bei 40 °C unter Zugabe von 49 Teilen 20 %iger Natronlauge bei pH 7,5 umgesetzt. Der Farbstoff wird abgesaugt und im Vakuum getrocknet. Er färbt Baumwolle in rotstichigen Gelbtönen und besitzt die Formel

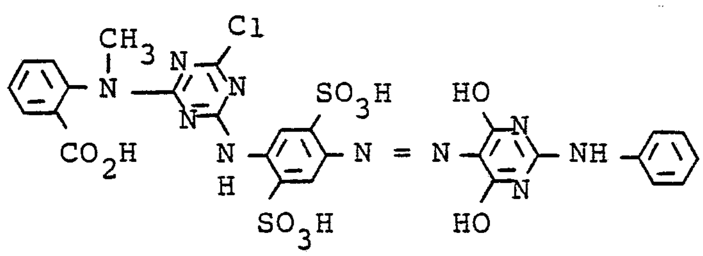

Beispiel 7

Zu einer Lösung von 2-(2',5'-Disulfoanilino)-4,6-dichlor-1,3,5-triazin, die durch Umsetzung einer neutralen Lösung von 50,6 Teilen Anilin-2,5-disulfosäure in 300 Teilen Wasser mit einer feinen Suspension von 38,3 Teilen Cyanurchlorid in 375 Teilen Eiswasser bei 0 - 5 °C unter Einhaltung von pH 6 hergestellt worden ist, werden 37,6 Teile Paraminsäure, gelöst bei pH 7 in 200 Teilen Wasser, gegeben. Man rührt bei 10 - 15 °C, wobei mit 20 %iger Natronlauge pH 6 eingestellt und gehalten wird. Sobald die Umsetzung beendet ist, kühlt man auf 0 °C, gibt 120 Teile 18 %ige Salzsäure und anschließend 13,8 Teile Natriumnitrit, in 50 Teilen Wasser gelöst, zu und rührt eine Stunde lang bei 0 - 5 °C. Dann läßt man zu der mit Natriumacetat auf pH 3,5 gebrachten Diazoniumsalzlösung eine mit Natronlauge auf pH 12,8 eingestellte Lösung von 25,4 Teilen 6-Aminouracil in 250 Teilen Wasser tropfen. Der pH-Wert des Kupplungsgemisches steigt zunächst auf 7,1, fällt dann aber wieder ab und wird mit Soda bei 7 gehalten. Nach Beendigung der Kupplung wird der Farbstoff mit Natriumchlorid ausgesalzen, abgesaugt und getrocknet. Er färbt Cellulosematerial in goldgelben Tönen und entspricht der Formel

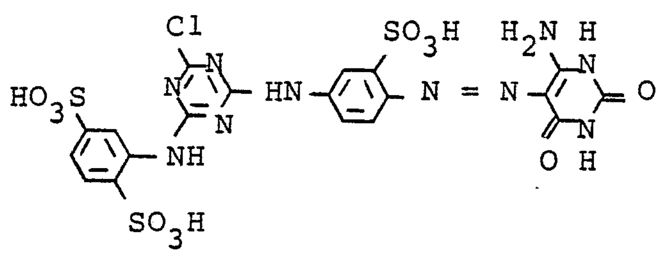

Beispiel 8

Der aus 15,7 Teilen diazotiertem 2-[3'-(ß-Sulfoäthyl)-1',2',4'-oxdiazolyl-5']-4-nitroanilin und 6,9 Teilen 6-Aminouracil durch Kupplung im schwach alkalischen pH-Bereich erhaltene Azofarbstoff wird mit 9,8 Teilen 60 %igem Natriumsulfid bei 40 - 45 °C 3 Stunden lang reduziert. Anschließend läßt man innerhalb von 45 Minuten eine Mischung aus 12,5 Teilen Wasserstoffperoxid und 30 Teilen Eiswasser zutropfen und rührt 2 Stunden lang nach. Das Reaktionsgemisch läßt man dann zu einer filtrierten Lösung von 2-(2',5'-Disulfoanilino)-4,6-dichlor-1,3,5-triazin fließen, die durch Umsetzung einer neutralen Lösung von 12,7 Teilen Anilin-2,5-disulfonsäure in 75 Teilen Wasser mit einer feinen Suspension von 9,6 Teilen Cyanurchlorid in 100 Teilen Eiswasser bei 0 - 5 °C unter Einhaltung von pH 6 hergestellt worden ist. Man erwärmt auf 35 bis 40 °C und hält den pH-Wert durch Zugabe von fester Soda bei 6,5, bis er konstant bleibt und kein freies Amin mehr nachzuweisen ist. Nun wird mit Natriumchlorid ausgesalzen, der Farbstoff der Formel

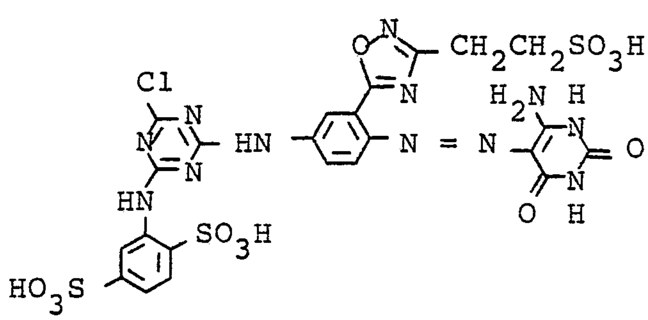

abgesaugt und getrocknet. Er färbt Cellulosematerial in goldgelben Tönen mit guten Echtheiten.

Die in Beispiel 6 bis 8 beschriebenen Farbstoffe entsprechen der allgemeinen Formel

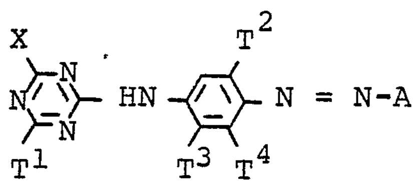

In der Tabelle 3 sind weitere Farbstoffe aufgeführt, die ebenfalls dieser allgemeinen Formel entsprechen, ähnlich gute Eigenschaften aufweisen und nach analogen Verfahren hergestellt werden können.

Tabelle 3

| X | $T^1$ | $T^2$ | $T^3$ | $T^4$ | A | Farbton |
|---|---|---|---|---|---|---|
| Cl | $H_2N$ | $SO_3H$ | H | H | 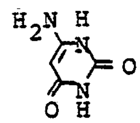 | goldgelb |
| " | Cl | " | " | " | " | " |
| " | 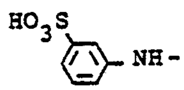 | " | " | " | " | " |
| F | 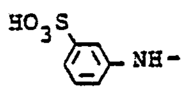 | " | " | " | " | " |
| Cl | 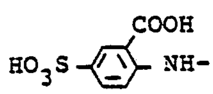 | " | " | " | " | " |
| " | 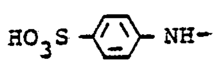 | " | " | " | " | " |
| " | 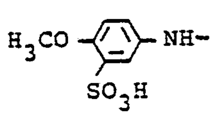 | " | " | " | " | " |
| " | Cl | " | $SO_3H$ | " | " | gelb |
| " | $NH_2$ | " | " | " | " | " |
| " | 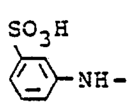 | " | " | " | " | " |

| X | $T^1$ | $T^2$ | $T^3$ | $T^4$ | A | Farbton |
|---|---|---|---|---|---|---|
| Cl | 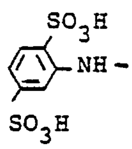 | $SO_3H$ | $SO_3H$ | H | 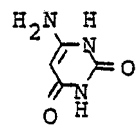 | gelb |
| " | 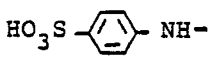 | " | " | " | " | " |
| " | 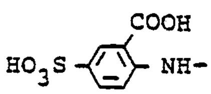 | " | " | " | " | " |
| " | 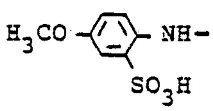 | " | " | " | " | " |
| " | 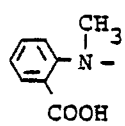 | " | " | " | " | " |
| " | 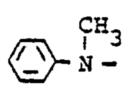 | " | " | " | " | " |
| " | 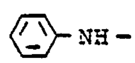 | " | " | " | " | " |
| " | 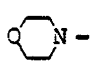 | " | " | " | " | " |
| " | 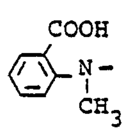 | 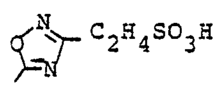 | H | H | " | goldgelb |

| X | $T^1$ | $T^2$ | $T^3$ | $T^4$ | A | Farbton |
|---|---|---|---|---|---|---|
| Cl | 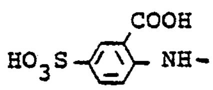 | 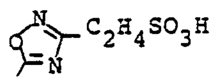 | H | H | 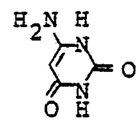 | goldgelb |
| " | 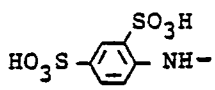 | " | " | " | " | " |
| " | 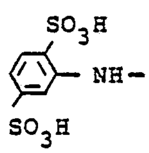 | 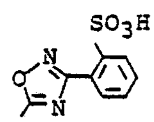 | " | " | " | " |
| " | 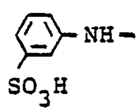 | $SO_3H$ | " | $SO_3H$ | " | gelb |
| " | 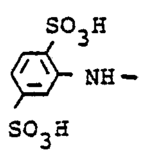 | " | " | H | 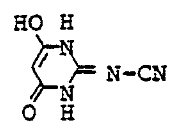 | goldgelb |
| " | 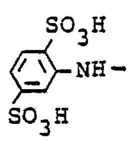 | " | $SO_3H$ | " | " | gelb |
| F | 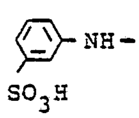 | " | " | " | " | " |
| Cl | 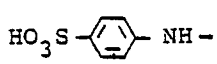 | " | " | " | " | " |

| X | $T^1$ | $T^2$ | $T^3$ | $T^4$ | A | Farbton |
|---|---|---|---|---|---|---|
| Cl | 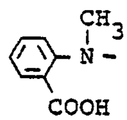 | $SO_3H$ | $SO_3H$ | H | 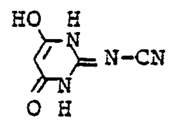 | gelb |
| " | 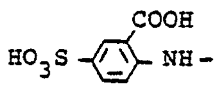 | " | " | " | " | " |
| " | 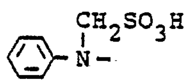 | " | " | " | " | " |
| " | 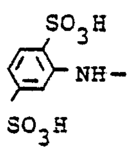 | " | H | $SO_3H$ | " | " |
| " | 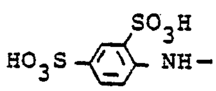 | " | " | H | " | goldgelb |
| " | 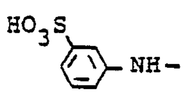 | " | " | " | " | " |
| " | 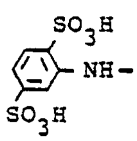 | " | " | " | 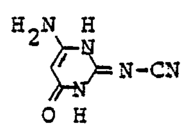 | " |
| " | 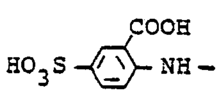 | " | " | " | " | " |

| X | $T^1$ | $T^2$ | $T^3$ | $T^4$ | A | Farbton |
|---|---|---|---|---|---|---|
| Cl | 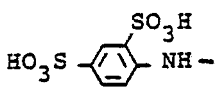 | $SO_3H$ | H | H | 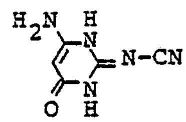 | goldgelb |
| " | 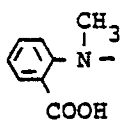 | " | " | " | " | " |
| " | 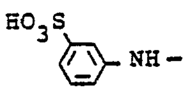 | " | " | " | " | " |
| " | 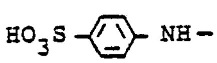 | " | " | " | " | " |
| " | 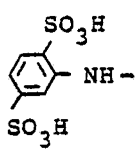 | " | " | $SO_3H$ | " | " |
| " | 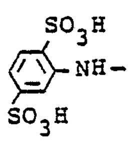 | " | " | H | 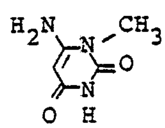 | " |
| " | 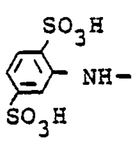 | " | " | " | 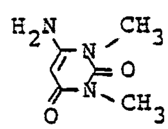 | " |
| " | 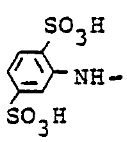 | " | " | " | 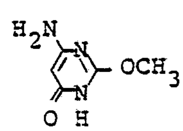 | " |

| X | $T^1$ | $T^2$ | $T^3$ | $T^4$ | A | Farbton |
|---|---|---|---|---|---|---|
| Cl | 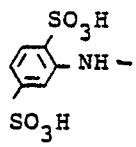 | $SO_3H$ | H | H | 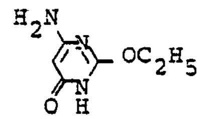 | goldgelb |
| " | 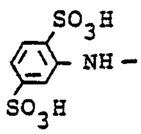 | " | " | " | 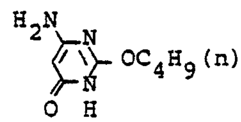 | " |
| " | Cl | $SO_3H$ | $SO_3H$ | " | 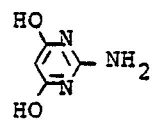 | gelb |
| " | $NH_2$ | " | " | " | " | " |
| " | $CH_3-N-CH_2CH_2-SO_3H$ | " | " | " | 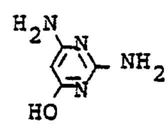 | goldgelb |
| " | Cl | " | " | " | 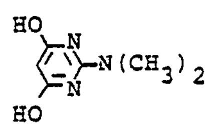 | gelb |
| " | 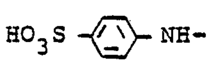 | " | " | " | " | " |
| " | 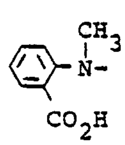 | " | " | " | 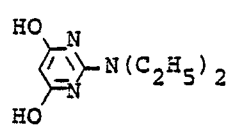 | " |

| X | $T^1$ | $T^2$ | $T^3$ | $T^4$ | A | Farbton |
|---|---|---|---|---|---|---|
| Cl | 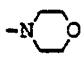 | $SO_3H$ | $SO_3H$ | H | 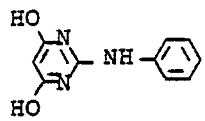 | goldgelb |
| " | $CH_3-N-CH_2CH_2-SO_3H$ | " | " | " | 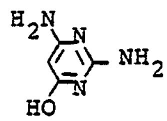 | " |
| " | Cl | " | " | " | " | " |
| " | " | " | " | " | 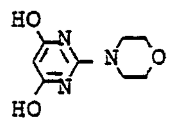 | gelb |
| F | 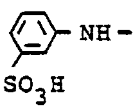 | " | " | " | " | " |
| Cl | Cl | " | " | " | 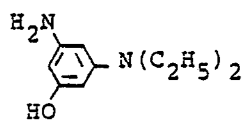 | goldgelb |
| " | " | " | " | " | 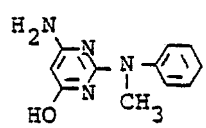 | " |
| " | " | " | " | " | 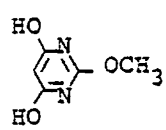 | gelb |

| X | $T^1$ | $T^2$ | $T^3$ | $T^4$ | A | Farbton |
|---|---|---|---|---|---|---|
| Cl | 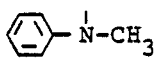 | $SO_3H$ | $SO_3H$ | H | 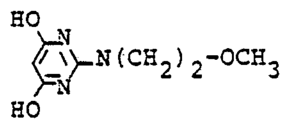 | gelb |
| " | Cl | " | " | " | 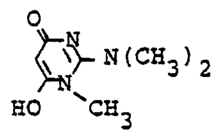 | goldgelb |
| " | " | " | " | " | 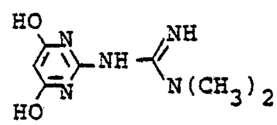 | gelb |
| " | 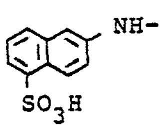 | " | " | " | 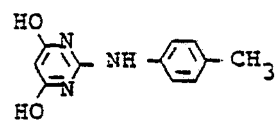 | goldgelb |
| " | Cl | " | " | " | 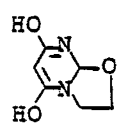 | gelb |
| " | 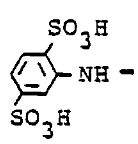 | " | " | " | 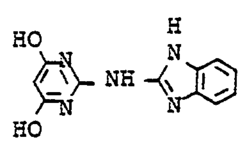 | " |

Beispiel 9

Eine neutrale Lösung von 37 Teilen Flavonsäure in 400 Teilen Wasser läßt man zu einer feinen Suspension von 38,6 Teilen Cyanurchlorid in 380 Teilen Eiswasser tropfen. Der pH-Wert wird bei 0 - 2 °C mit Soda auf 6 eingestellt und so lange gehalten, bis kein diazotierbares Amin mehr nachweisbar ist. Nun gibt man 37,6 Teile Paraminsäure zu, erhöht die Temperatur auf 15 - 20 °C, stellt mit Natronlauge pH 6 ein und hält bei diesem Wert, bis die Umsetzung vollständig ist. Dann gibt man 120 Teile 18 %ige Salzsäure zu und diazotiert 3 Stunden lang bei 0 - 5 °C mit 13,8 Teilen Natriumnitrit. Die fertige Diazoniumsalzsuspension läßt man bei 0 - 5 °C zu 25,4 Teilen bei pH 12 in 400 Teilen Wasser gelöstem 4-Amino-2,6-dihydroxypyrimidin fließen und läßt die Mischung bei pH 8 - 9 auskuppeln. Der fertige Farbstoff wird bei pH 6,5 mit Natriumchlorid ausgesalzen, abgesaugt und getrocknet. Er hat die Formel

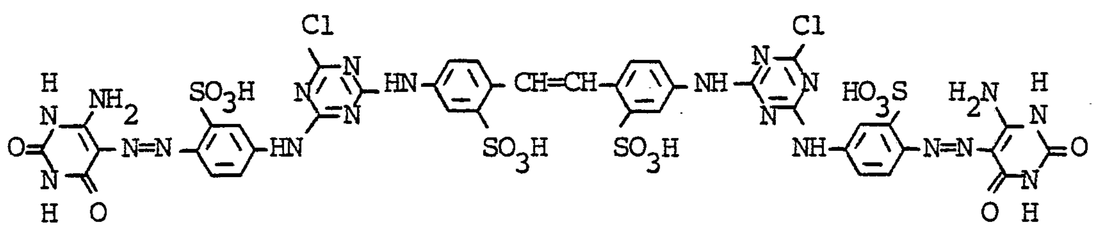

Die gleiche Verbindung erhält man, wenn man mit diazotierter p-Nitroanilin-2-sulfonsäure auf 4-Amino-2,6-dihydroxypyrimidin kuppelt, die Nitrogruppe reduziert und den erhaltenen aminogruppenhaltigen Farbstoff mit dem Reaktionsprodukt aus 1 Mol Flavonsäure mit 2 Mol Cyanurchlorid umsetzt.

Der in Beispiel 9 beschriebene Farbstoff läßt sich durch die allgemeine Formel

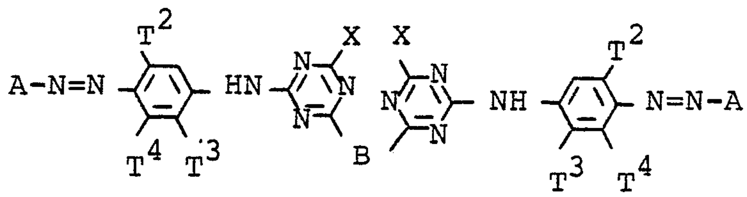

darstellen. Weitere Farbstoffe, die nach einem der in Beispiel 9 beschriebenen Wege erhalten werden können, und die oben genannter Formel entsprechen, sind in Tabelle 4 zusammengefaßt.

0066714

Tabelle 4

| X | B | $T^2$ | $T^3$ | $T^4$ | A | Farbton |
|---|---|---|---|---|---|---|
| Cl | 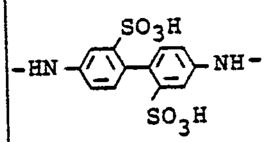 | $SO_3H$ | H | H | 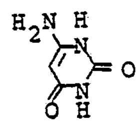 | goldgelb |
| " | 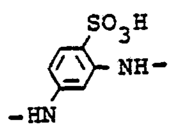 | " | " | " | " | " |
| " | 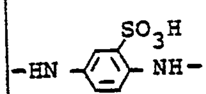 | " | " | " | " | " |
| " | 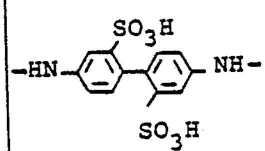 | " | $SO_3H$ | " | " | gelb |
| " | 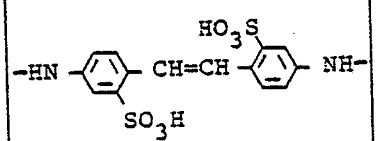 | " | " | " | " | " |
| " | 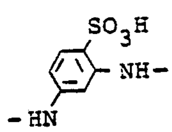 | " | " | " | " | " |
| " | 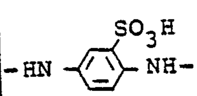 | " | " | " | " | " |

| X | B | $T^2$ | $T^3$ | $T^4$ | A | Farbton |
|---|---|---|---|---|---|---|
| Cl | 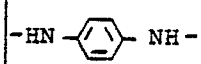 | $SO_3H$ | $SO_3H$ | H | 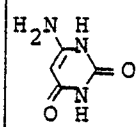 | gelb |
| " | 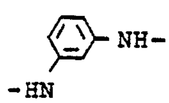 | " | " | " | " | " |
| " | $-HN-CH_2CH_2-NH-$ | " | " | " | " | " |
| " | $-HN-(CH_2)_3-NH-$ | " | " | " | " | " |
| " | $-HN-(CH_2)_4-NH-$ | " | " | " | " | " |
| " | 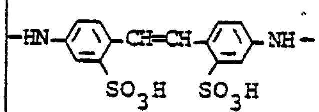 | " | H | $SO_3H$ | " | " |
| " | 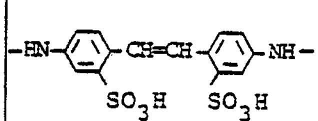 | 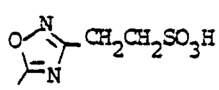 | " | H | " | goldgelb |
| " | 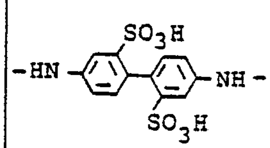 | " | " | " | " | " |
| " | 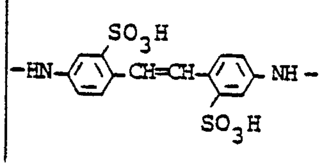 | $SO_3H$ | " | " | 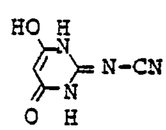 | " |

| X | B | $T^2$ | $T^3$ | $T^4$ | A | Farbton |
|---|---|---|---|---|---|---|
| Cl | 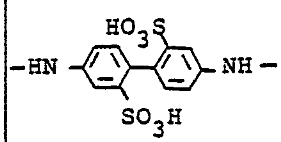 | $SO_3H$ | H | H | 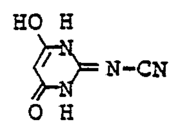 | goldgelb |
| " | 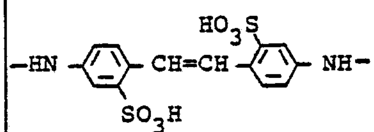 | " | $SO_3H$ | " | " | gelb |
| " | 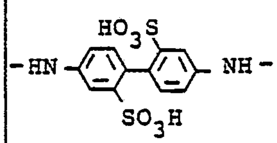 | " | " | " | " | " |
| " | 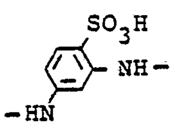 | " | " | " | " | " |
| " | 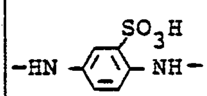 | " | " | " | " | " |
| " | 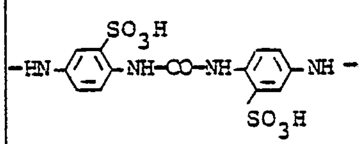 | " | " | " | " | " |
| " | 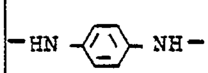 | " | " | " | " | " |
| " | 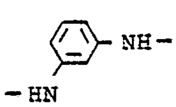 | " | " | " | " | " |

| X | B | $T^2$ | $T^3$ | $T^4$ | A | Farbton |
|---|---|---|---|---|---|---|
| Cl | $-HN-CH_2-CH_2-NH-$ | $SO_3H$ | $SO_3H$ | H | 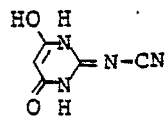 | gelb |
| " | $-HN-(CH_2)_3-NH-$ | " | " | " | " | " |
| " | $-HN-(CH_2)_4-NH-$ | " | " | " | " | " |
| " | 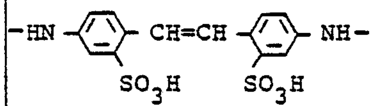 | " | H | $SO_3H$ | " | " |
| " | " | " | " | H | 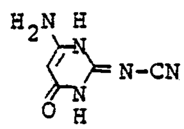 | goldgelb |
| " | 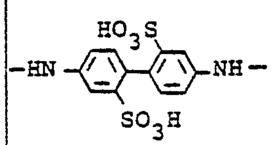 | " | " | " | " | " |
| " | 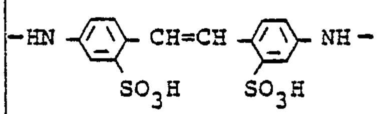 | " | $SO_3H$ | " | " | " |
| " | 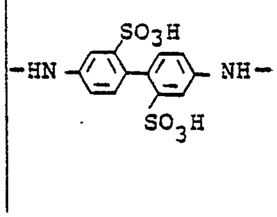 | " | " | " | " | " |

| X | B | $T^2$ | $T^3$ | $T^4$ | A | Farbton |
|---|---|---|---|---|---|---|
| Cl | 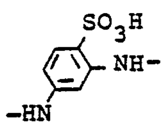 | $SO_3H$ | $SO_3H$ | H | 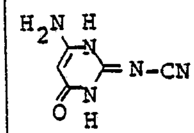 | goldgelb |
| " | 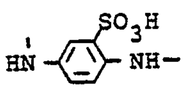 | " | " | " | " | " |
| " | 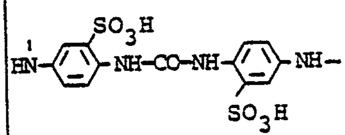 | " | " | " | " | " |
| " | 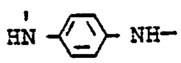 | " | " | " | " | " |
| " | $HN-CH_2-CH_2-NH-$ | " | " | " | " | " |
| " | $HN(CH_2)_3-NH-$ | " | " | " | " | " |
| " | $HN(CH_2)_4-NH-$ | " | " | " | " | " |
| " | 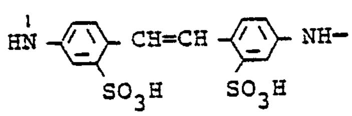 | " | H | $SO_3H$ | " | " |
| " | " | " | " | H | 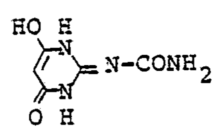 | " |
| " | 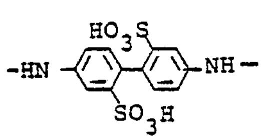 | " | " | " | " | " |

| X | B | $T^2$ | $T^3$ | $T^4$ | A | Farbton |
|---|---|---|---|---|---|---|
| Cl | 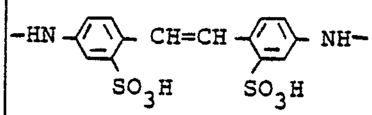 | $SO_3H$ | H | $SO_3H$ | 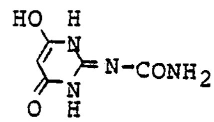 | gelb |
| " | " | " | $SO_3H$ | H | " | " |
| " | 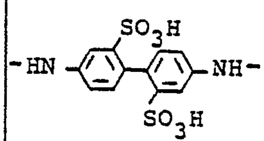 | " | " | " | " | " |
| " | 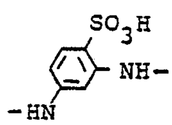 | " | " | " | " | " |
| " | 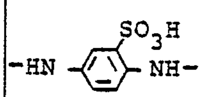 | " | " | " | " | " |
| " | 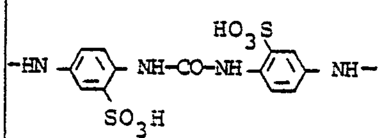 | " | " | " | " | " |
| " | 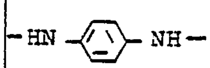 | " | " | " | " | " |
| " | 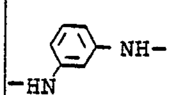 | " | " | " | " | " |
| " | $-HN-CH_2-CH_2-NH-$ | " | " | " | " | " |

| X | B | $T^2$ | $T^3$ | $T^4$ | A | Farbton |
|---|---|---|---|---|---|---|
| Cl | $-HN-(CH_2)_3-NH-$ | $SO_3H$ | $SO_3H$ | H | 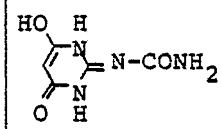 | gelb |
| " | $-HN-(CH_2)_4-NH-$ | " | " | " | " | " |
| " | 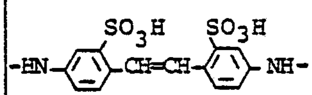 | " | " | " | 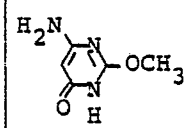 | " |
| " | " | " | " | " | 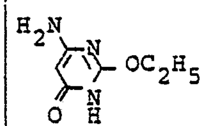 | " |
| " | 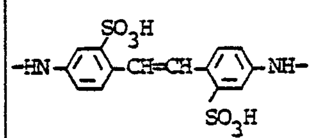 | " | " | " | 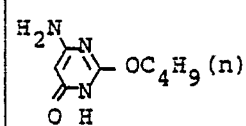 | " |
| " | 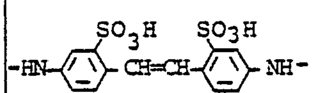 | " | H | " | 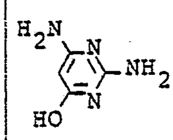 | rotstichig gelb |
| " | " | " | " | " | 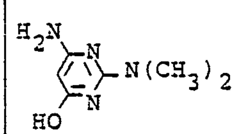 | " |
| " | " | " | " | " | 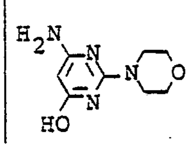 | " |

| X | B | $T^2$ | $T^3$ | $T^4$ | A | Farbton |
|---|---|---|---|---|---|---|
| Cl | 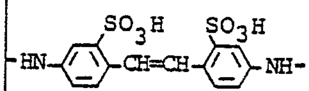 | $SO_3H$ | H | H | 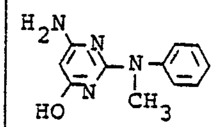 | rotstichig gelb |
| " | " | " | " | " | 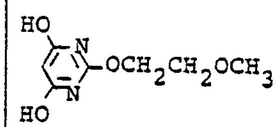 | gelb |
| " | " | " | $SO_3H$ | " | " | " |
| " | 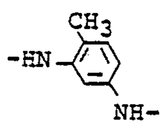 | " | " | " | 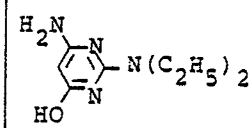 | rotstichig gelb |
| " | 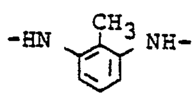 | " | " | " | " | " |
| " | 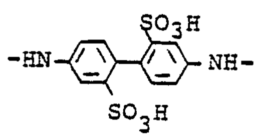 | " | " | " | 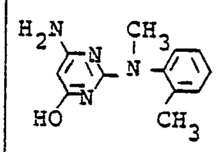 | " |
| " | 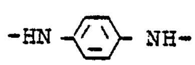 | " | " | " | 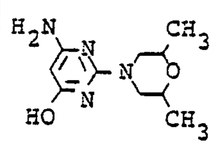 | " |
| " | 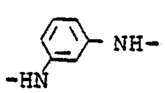 | " | " | " | 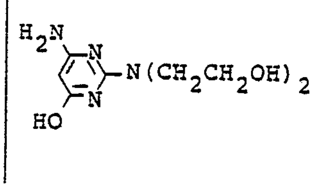 | " |

| X | B | $T^2$ | $T^3$ | $T^4$ | A | Farbton |
|---|---|---|---|---|---|---|
| Cl | 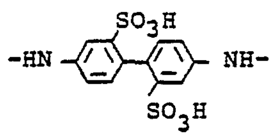 | $SO_3H$ | $SO_3H$ | H | 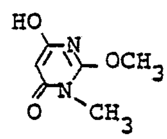 | gelb |
| " | 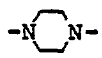 | " | H | " | 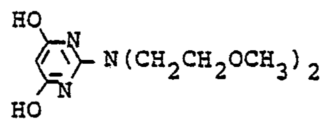 | rotstichig gelb |

Beispiel 10

Das primäre Kondensationsprodukt aus 18,8 Teilen 1,3-Diaminobenzol-4-sulfonsäure und 19 Teilen Cyanurchlorid wird, wie im Beispiel 1 beschrieben, diazotiert und bei pH 7,0 - 8,0 auf 16 Teile neutral gelösten N,N'-Di-(4,6-dihydroxypyrimidinyl-2)-piperazins gekuppelt. Der ausgefällte Farbstoff wird schonend getrocknet und färbt Baumwolle in brillanten, grünstichig gelben Farbtönen. Er besitzt die Konstitution

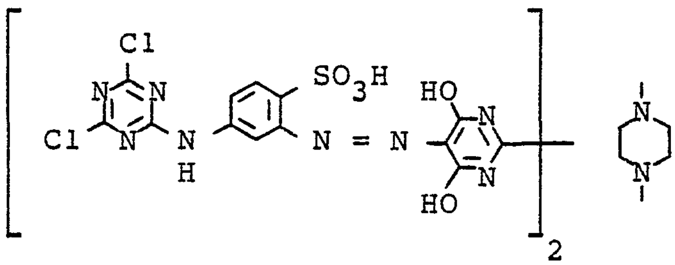

Durch Umsetzung mit 2 bis 2,5 Moläquivalenten eines aliphatischen, araliphatischen oder aromatischen Amins bei 40 - 50 °C um den Neutralpunkt lassen sich 2 Chloratome durch Aminreste ersetzen. Man erhält z. B. für Heißfärbeverfahren geeignete Farbstoffe mit guten Eigenschaften.

Der im Beispiel 10 beschriebene Farbstoff entspricht der allgemeinen Formel

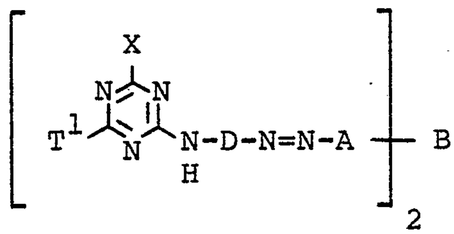

Weitere Farbstoffe mit ähnlich guten Eigenschaften, die mit dem in Beispiel 10 beschriebenen Verfahren erhalten werden können und der obigen allgemeinen Formel entsprechen, sind in der Tabelle 5 aufgeführt.

Tabelle 5

| X | $T^1$ | D | A | B | Farbton |
|---|---|---|---|---|---|
| Cl | $NH_2$ | 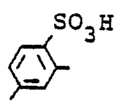 | 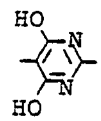 | 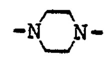 | gelb |
| F | 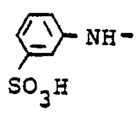 | " | " | " | " |
| Cl | 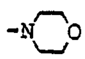 | " | " | " | " |
| " | 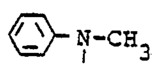 | " | " | " | " |
| " | $C_3H_7-O-CH_2CH_2-NH-$ | " | " | " | " |
| " | Cl | " | " | " | " |
| " | " | 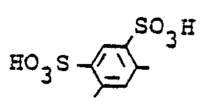 | " | " | " |
| " | 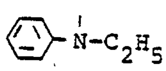 | " | " | " | " |
| " | 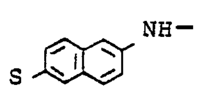 | " | " | " | " |
| " | Cl | " | 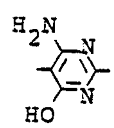 | " | " |

| X | $T^1$ | D | A | B | Farbton |
|---|---|---|---|---|---|
| Cl | $NH_2$ | 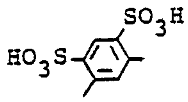 | 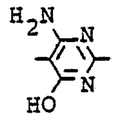 | 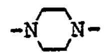 | gelb |
| " | 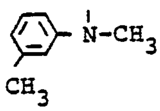 | " | " | " | " |
| " | Cl | 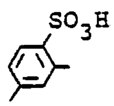 | " | " | " |
| " | 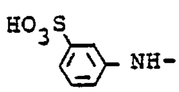 | " | " | " | " |
| " | 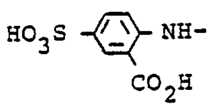 | " | " | " | " |
| " | " | 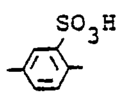 | " | " | goldgelb |
| " | Cl | 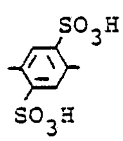 | " | " | " |
| " | " | " | 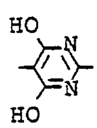 | " | " |

| X | $T^1$ | D | A | B | Farbton |
|---|---|---|---|---|---|
| Cl | Cl | 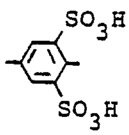 | 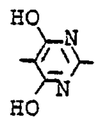 | 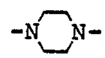 | rotstichig gelb |
| " | " | 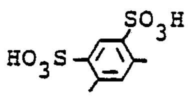 | " | 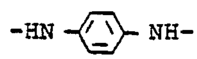 | gelb |
| " | " | " | " | -NH- | " |
| " | " | 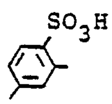 | 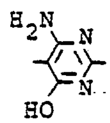 | 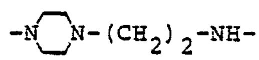 | " |
| " | " | " | 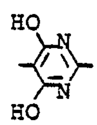 | $-NH-(CH_2)_4-NH-$ | " |
| " | " | 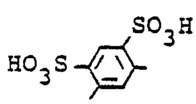 | " | $-HN-(CH_2)_6-NH-$ | " |
| " | " | " | 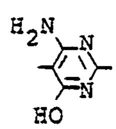 | " | " |
| " | " | 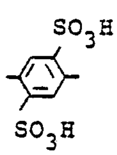 | " | $-HN-(CH_2)_4-NH-$ | goldgelb |

Beispiel 11

Eine neutrale Lösung von 26,8 Teilen 1,4-Diaminobenzol-2,5-disulfonsäure in 900 Teilen Wasser wird bei 0 - 5°C zu einer feinen Suspension von 20 Teilen Cyanurchlorid in 200 Teilen Eiswasser gegeben. Man rührt bei 0 - 5°C und hält den pH-Wert mit Soda bei 5,5 - 6,5 bis die Umsetzung vollständig ist. Dann gibt man das Reaktionsgemisch zu einer neutralen Lösung von 17,3 Teilen Metanilsäure in 175 Teilen Wasser, erwärmt auf 40 - 45°C und hält den pH-Wert durch Zugabe von Soda bei 5,5 - 6,5 bis die Umsetzung beendet ist. Anschließend kühlt man auf 0 - 5°C ab und läßt die Lösung zu einer feinen Suspension von 20 Teilen Cyanurchlorid in 200 Teilen Eiswasser fließen. Die Mischung wird 24 Stunden bei 0 - 5°C und pH 4,5 - 5 gerührt, filtriert und schließlich mit einer neutralen Lösung von 18,8 Teilen Metaminsäure in 200 Teilen Wasser versetzt. Man rührt bei 40°C und pH 6 - 6,5 bis die Umsetzung vollständig ist. Es wird wieder abgekühlt, mit Natriumchlorid ausgesalzen, der Niederschlag abgesaugt und getrocknet. 52 Teile des so erhaltenen Zwischenproduktes in Form seines Natriumsalzes werden in 1 000 Teilen Wasser gelöst, mit 36 Teilen 18 %iger Salzsäure versetzt und bei 0 - 5°C mit 4,2 Teilen Natriumnitrit 3 Stunden lang diazotiert. Die Diazoniumsalzlösung wird mit Natriumbicarbonat auf pH 4 eingestellt und tropfenweise mit einer durch Natronlauge auf pH 12 gebrachten Lösung von 9,1 Teilen 2-Cyanamino-4-amino-6-hydroxypyrimidin in 300 Teilen Wasser in der Weise versetzt, daß der pH 7 - 7,2 nicht überschritten wird. Der ausgekuppelte Farbstoff wird mit 300 Teilen Natriumchlorid ausgesalzen, abgesaugt und getrocknet. Er färbt Baumwolle in brillanten gelben Tönen und entspricht der Formel

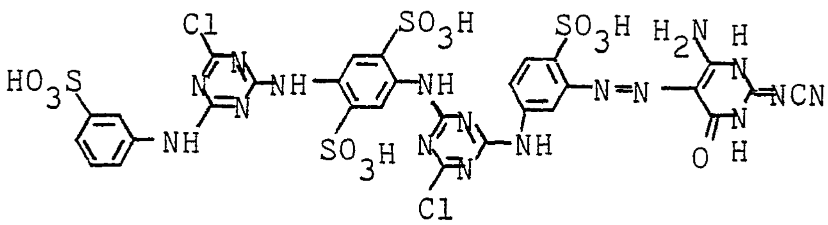

Weitere Farbstoffe der allgemeinen Formel

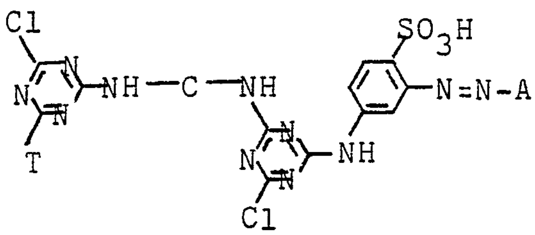 ,

die nach der Verfahrensweise von Beispiel 11 oder auf einem ähnlichen Weg hergestellt werden können, sind in Tabelle 6 zusammengefaßt:

Tabelle 6

| $T^1$ | C | A | Farbton |
|---|---|---|---|
| 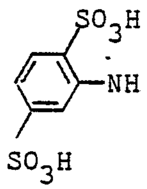 | 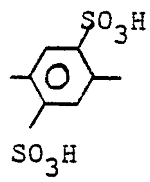 | 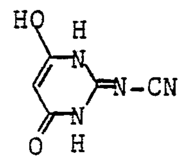 | gelb |
| $H(OH_4C_2)_3NH$ | " | " | " |
| 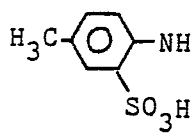 | " | " | " |
| 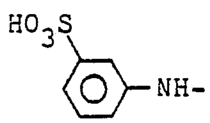 | 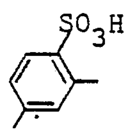 | " | " |
| 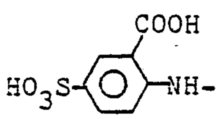 | " | " | " |
| 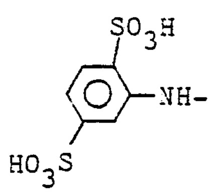 | " | " | " |
| $HO_3S-H_2CCH_2-HN-$ | " | " | " |

Tabelle 6 (Fortsetzung)

| $T^1$ | C | A | Farbton |
|---|---|---|---|
| 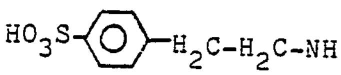 | 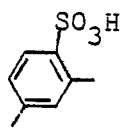 | 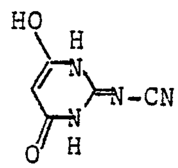 | gelb |
| Cl | 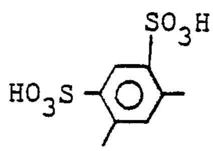 | " | " |
| Cl | 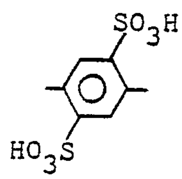 | " | " |
| Cl | 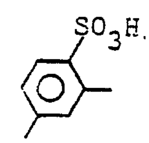 | " | " |
| 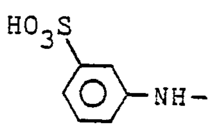 | 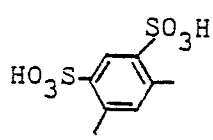 | " | " |
| $HO_3S-H_2C-H_2C-NH-$ | 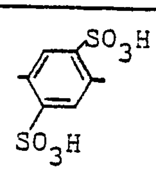 | " | " |
| 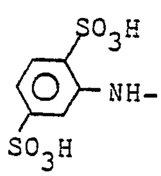 | 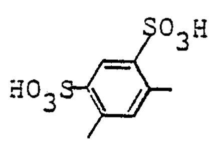 | 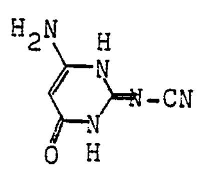 | " |

Tabelle 6 (Fortsetzung)

| $T^1$ | C | A | Farbton |
|---|---|---|---|
| $HO_3S-H_2C-H_2C-NH-$ | 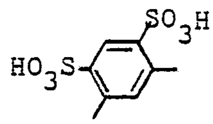 | 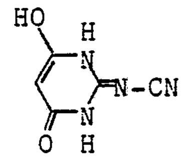 | gelb |
| 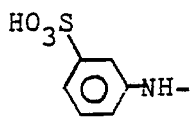 | " | " | " |
| 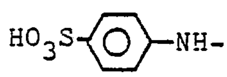 | " | " | " |
| 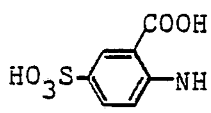 | " | " | " |
| 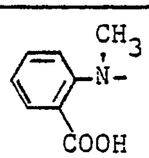 | " | " | " |
| 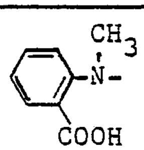 | 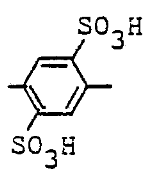 | " | " |
| $HO_3S-H_2C-H_2C-N-$<br>$CH_3$ | " | " | " |
| 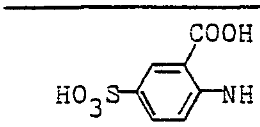 | " | " | " |
| 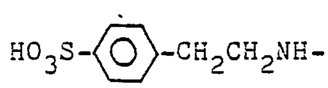 | " | " | " |
| 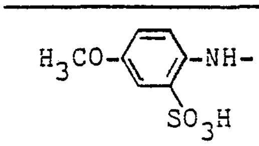 | " | " | " |

Patentansprüche

1. Sulfonsäuregruppenhaltige Verbindungen der allgemeinen Formel I

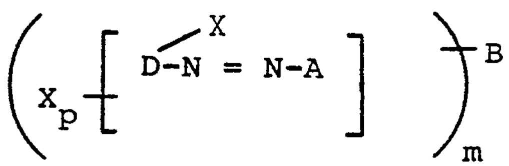

I,

in der

D den Rest einer Diazokomponente,

X einen faserreaktiven Rest,

die Zahlen 1 oder 2,

für m = 1 X-B = X und

für m = 2 B ein Brückenglied,

p die Zahlen 0 oder 1 und

A einen Rest der Formeln

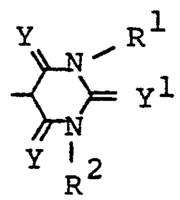

oder

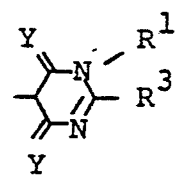

bedeuten, wobei

$R^1$ Wasserstoff, gegebenenfalls substituiertes Alkyl oder Phenyl,

$R^2$ Wasserstoff, gegebenenfalls substituiertes Alkyl oder Phenyl,

$R^3$ gegebenenfalls substituiertes Amino oder Hydroxy,

Y Sauerstoff oder gegebenenfalls substituiertes Imino und

$Y^1$ Sauerstoff oder gegebenenfalls substituiertes Imino sind und wobei

$R^1$ und $Y^1$ oder $R^1$ und $R^3$ zu einem Ring verknüpft sein können und

A weder der Barbitursäurerest noch ein Triaminopyrimidinrest ist.

2. Farbstoffe gemäß Anspruch 1,wobei m = 1 ist.

3. Farbstoffe gemäß Anspruch 1 wobei p = 0 ist.

4. Farbstoffe gemäß Anspruch 1,wobei X ein reaktiver Rest der Triazinyl- oder Pyrimidylreihe ist.

5. Farbstoffe gemäß Anspruch 1,wobei A ein Rest der Formel

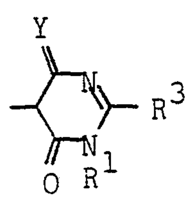 ist und

Y, $R^1$ und $R^3$ die angegebene Bedeutung haben.

6. Farbstoffe gemäß Anspruch 1 und5, wobei $R^1$ Wasserstoff ist.

7. Farbstoffe gemäß Anspruch 1 und 5, wobei
   $R^3$ $C_1$- bis $C_4$-Alkoxy, $C_1$- bis $C_4$-Mono- oder - Dialkylamino, gegebenenfalls durch Chlor, Methyl, Methoxy oder Ethoxy substituiertes Phenylamino, N-Methyl- oder N-Ethyl-N-phenylamino, Pyrrolidino, Piperidino, Morpholino, Piperazino, N-Methylpiperazino, Carbamoylamino oder Cyanamino ist.

8. Farbstoffe gemäß Anspruch 1, wobei
   D der Rest einer Diazokomponente der Anilinreihe ist.

9. Farbstoffe gemäß Anspruch 1 der Formel

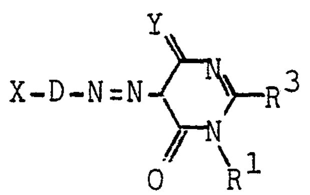

,

in der
D, $R^1$, $R^3$, X und Y die angegebene Bedeutung haben.

10. Farbstoffe gemäß Anspruch 1 und 9, wobei
    D der Rest einer Diazokomponente der Anilinreihe ist.